(19)

Europäisches
Patentamt
European
Patent Office
Office européen
des brevets

(11)    **EP 4 276 058 A1**

(12)    **EUROPEAN PATENT APPLICATION**

(43) Date of publication:
**15.11.2023   Bulletin 2023/46**

(21) Application number: **22172353.9**

(22) Date of filing: **09.05.2022**

(51) International Patent Classification (IPC):
**B82B 1/00** *(2006.01)*

(52) Cooperative Patent Classification (CPC):
**B82B 1/003**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Technische Universität München
80333 München (DE)**

(72) Inventors:
• **Dietz, Hendrik
  85540 Haar (DE)**
• **Pumm, Anna-Katharina
  82024 Taufkirchen (DE)**

• **Engelen, Wouter
  80804 München (DE)**
• **Kopperger, Enzo
  80807 München (DE)**

(74) Representative: **Engelhard, Markus
Boehmert & Boehmert
Anwaltspartnerschaft mbB
Pettenkoferstrasse 22
80336 München (DE)**

Remarks:
The complete document including Reference
Table(s) and the Sequence Listing(s) can be
downloaded from the EPO website

(54)    **AC-FIELD DRIVEN MACROMOLECULAR ROTARY MOTOR**

(57)    The present invention relates to a nucleic acid nanomotor. The present invention further relates to a system comprising a nanomotor and a control unit configured to generate an alternating current for rotating said nanomotor. The present invention also relates to a method of rotating a rotor of a nanomotor with respect to a stator of said nanomotor. Furthermore, the present invention relates to a use of a nanomotor or a system as a turbine, propulsion, fluid mixer, energy storing device, machine applying mechanical force e.g. on a system coupled to said nanomotor, and/or in chemical synthesis.

EP 4 276 058 A1

**Description**

FIELD OF THE INVENTION

The present invention relates to a nucleic acid nanomotor. The present invention further relates to a system comprising a nanomotor and a control unit configured to generate an alternating current for rotating said nanomotor. The present invention also relates to a method of rotating a rotor of a nanomotor with respect to a stator of said nanomotor. Furthermore, the present invention relates to a use of a nanomotor or a system as a turbine, propulsion, fluid mixer, energy storing device, machine applying mechanical force e.g. on a system coupled to said nanomotor, and/or in chemical synthesis.

BACKGROUND OF THE INVENTION

The development of the steam engine triggered the industrial revolution, and by now a world without motors is hardly imaginable. Given the rapid advances in creating ever more miniaturized integrated systems in fields ranging from semiconductors to synthetic biology, it is clear that nanoscale motor units have the potential to create truly revolutionary opportunities for nanoscale science and technology. Indeed, biological molecular motors such as the celebrated FiFo ATPase inspire visions of a future in which artificial molecular motors are designed and employed for mechanically driven chemical synthesis, for chemotaxis, and other tasks such as directed transport of molecules. However, the design of nanomotors is very intricate.

To impart directionality on the motions of a molecular-scale mechanism, one must overcome and make use of the randomizing thermal forces that are omnipresent on such small scales, and in liquid solution at ambient temperatures. Furthermore, in equilibrium without energy supply, directional motion cannot be sustained without violating the laws of thermodynamics. In the spirit of the Curie principle, a directionally biased motion can be achieved within the theoretical framework of Brownian ratchets, which are spatially periodic, diffusive mechanisms that have broken inversion symmetry, when operated under conditions away from thermodynamic equilibrium. Simple forms of energy supply that lead to periodic or stochastic modulation of energy barriers can then suffice to power autonomous directed motion, which makes the Brownian ratchet framework particularly attractive for applications. Brownian ratcheting has been successfully implemented in microscale systems, but the exploitation of such concepts to create artificial nanoscale motors remains in its infancy. Progress has been made in particular with prototypes of artificial molecular motors (AMM) created by organic chemical synthesis. In parallel, DNA nanotechnology and DNA origami have yielded a variety of nanoscale mechanical switch-like systems including pivots, hinges, crank sliders, and rotary mechanisms made from DNA molecules. Some of these objects could be switched through different configurations using strand displacement reactions (SDR) or by changing environmental parameters such as pH, ionic strength, temperature, and external fields. While many of these developments were conceptually based on borrowing intuition from how motors work at the larger scales, there have also been theoretical developments regarding how one can create stochastic artificial swimmers and motors by using the appropriate laws that govern nano-scale physics combining viscous and low Reynolds number dynamics and inherent stochasticity. However, nanomotors, such as autonomous nanomotors, have not yet been successfully implemented.

On the molecular scale in liquid solution the motion of molecules can be described as diffusion in a free energy landscape. The fundamental physical requirements to impose directionality on the motion of molecules against randomizing thermal forces include specifically sculpted energy landscapes and dynamic modulation of features such as energy barriers and minima. The modulation allows biasing the motion of the molecule along user-defined paths in a process called ratcheting. Among these Brownian ratchet concepts are flashing ratchets, where transition barrier heights are modulated in a stochastic or periodic fashion; information ratchets, where the energy landscape is updated dynamically depending on the state the motor is in - which incidentally appears to be the main operating principle of biological motors -; and rocking ratchets, where the energy landscape is tilted back and forth with an alternating force with vanishing time average. Small artificial molecular machines (AMMs) have previously been synthesized with an eye on realizing such ratchet-like mechanisms, leading to molecules whose motions can be biased by chemical fuels, light, and other stimuli. Previous achievements include autonomously functioning, chemically-fuelled, artificial molecular motors which operate continuously until the fuel is consumed, with approximately 12 h for each complete 360-degree rotation. There are also several examples of light-fuelled artificial molecular motors, with the fastest observed rotation speed on the scale of several minutes per rotation. Some of these impressive previous achievements have been rewarded with the 2016 Nobel prize in chemistry, however, molecular motors with characteristics and performance that makes them amenable to practical applications remain to be built.

Whereas the AMMs generated by chemical synthesis tend to include on the order of 100 atoms, DNA nanostructures, in particular DNA origami objects, advantageously can be much larger and encompass hundreds of thousands of atoms. Complementary to AMMs, DNA nanotechnologists have created a range of nanoscale mechanical devices including pivots, hinges, crank sliders, and rotary mechanisms that have been dynamically reconfigured using strand displacement reactions (SDR) or by changing environmental parameters such as pH, ionic strength, and temperature. For example, a nanoscale rotary apparatus has been described which performs rotary random walks around the central axis of a bearing [1].

The existing systems are slow, have a low assembly yield, or are unable to exert appreciable forces against external loading. There remains the need for nanomotors and systems comprising nanomotors that allow for a directional rotation. Furthermore, there remains the need for nanomotors and systems comprising nanomotors that rotate, particularly directionally rotate, with high speed. There also remains the need for autonomous nanoscale motors and systems comprising autonomous nanomotors. Moreover, there remains the need for nanomotors and systems comprising nanomotors that exert forces against external loading.

SUMMARY OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In a first aspect, the present invention relates to a nucleic acid nanomotor comprising a nucleic acid rotor and a nucleic acid stator,

wherein said stator comprises a first surface and a rotor docking site,

wherein said rotor comprises a stator docking site configured to be connected to said rotor docking site of said stator,

wherein said rotor has at least one longitudinal extension, preferably at least two longitudinal extensions, extending from said stator docking site along a longitudinal axis, wherein said longitudinal axis has a substantially parallel orientation to said first surface of said stator,

wherein said rotor is rotatable around a rotation axis substantially perpendicular to said longitudinal axis,

wherein said rotor is electrically charged.

In one embodiment, said longitudinal extension of said rotor, if present each of said two longitudinal extensions of said rotor, has a length of at least 1 nm, preferably at least 10 nm, more preferably at least 30 nm.

In one embodiment, a total length of said longitudinal extension of said rotor, if present of said two longitudinal extensions of said rotor, is in the range of from 20 nm to 1000 nm, preferably 30 nm to 700 nm, even more preferably 50 nm to 600 nm.

In one embodiment, said rotor has a rod-like shape and/or a T-like shape.

In one embodiment, said stator comprises at least one protrusion extending towards said rotor, preferably extending towards said rotor such that said rotor interacts with said protrusion at least once when rotating by 360° with respect to said rotation axis.

In one embodiment, the nanomotor is configured such that said rotor is rotatable within an energy landscape having at least one energy minimum.

In one embodiment, the nanomotor is configured such that said rotor is rotatable within an energy landscape defined by a plot of a free energy over a rotor angle $\theta$, wherein said rotor angle $\theta$ is a rotor angle of said longitudinal axis of said rotor with respect to an axis perpendicular to said rotation axis, wherein said energy landscape has at least one energy minimum.

In one embodiment, said rotor docking site and said stator docking site are directly connected, connected via a nucleic acid hinge, and/or connected via a nucleic acid torsional spring.

In a further aspect, the present invention relates to a system comprising

- a nanomotor comprising a rotor and a stator, wherein said stator comprises a first surface and a rotor docking site, wherein said rotor comprises a stator docking site configured to be connected to said rotor docking site of said stator,

wherein said rotor has a longitudinal extension extending from said stator docking site along a longitudinal axis, wherein said longitudinal axis has a substantially parallel orientation to said first surface of said stator,
wherein said rotor is rotatable around a rotation axis substantially perpendicular to said longitudinal axis,
wherein said rotor is electrically charged;
wherein, optionally, said nanomotor is a nanomotor as defined herein; and

- a control unit configured to generate an alternating current for rotating said nanomotor, wherein said control unit preferably comprises at least two electrodes;
wherein said stator of said nanomotor has a fixed orientation with respect to said control unit.

In one embodiment, said stator comprises at least one protrusion extending towards said rotor, preferably extending towards said rotor such that said rotor interacts with said protrusion at least once when rotating by 360° with respect to said rotation axis.

In one embodiment, said nanomotor, said nucleic acid rotor, said nucleic acid stator, said longitudinal extension of said rotor, said rotor docking site, and said stator docking site are as defined herein.

In a further aspect, the present invention relates to a method of rotating, preferably directionally rotating, a rotor of a nanomotor with respect to a stator of said nanomotor, comprising:

i) providing a nanomotor comprising a rotor and a stator, wherein said stator comprises a first surface and a rotor docking site, wherein said rotor comprises a stator docking site configured to be connected to said rotor docking site of said stator,

wherein said rotor has a longitudinal extension extending from said stator docking site along a longitudinal axis,
wherein said longitudinal axis has a substantially parallel orientation to said first surface of said stator,
wherein said rotor is rotatable around a rotation axis substantially perpendicular to said longitudinal axis,
wherein said rotor is electrically charged;
wherein, optionally, said nanomotor is a nanomotor as defined herein; and

ii) applying an alternating current to said nanomotor.

In one embodiment, said stator comprises at least one protrusion extending towards said rotor, preferably extending towards said rotor such that said rotor interacts with said protrusion at least once when rotating by 360° with respect to said rotation axis.

In one embodiment, said alternating current has a frequency in the range of from 0.1 to 1000 Hz, preferably in the range of from 0.5 Hz to 100 Hz, even more preferably in the range of from 1 Hz to 10 Hz, e.g. about 5 Hz.

In one embodiment, said alternating current has a voltage in the range of from 1 V to 200 V, preferably 5 V to 100 V, more preferably 20 V to 60 V.

In one embodiment, said rotor and/or said stator comprise(s) or consist(s) of nucleic acid(s), peptide(s), protein(s), and/or small molecule(s); wherein, preferably, said rotor and/or said stator comprise(s) or consist(s) of DNA.

In one embodiment, said nanomotor, said rotor, said stator, said longitudinal extension of said rotor, said rotor docking site, and said stator docking site are as defined herein.

In a further aspect, the present invention relates to a use of a nanomotor, as defined herein, or a system, as defined herein, as a turbine, propulsion, fluid mixer, energy storing device, machine applying mechanical force e.g. on a system coupled to said nanomotor, and/or in chemical synthesis.

In a further aspect, the present invention relates to a nanomotor, as defined herein, or a system, as defined herein, for use in medicine.

In a further aspect, the present invention relates to a nanomotor, as defined herein, or a system, as defined herein, for use in preventing or treating a disease selected from cancerous diseases, infectious diseases, inflammatory diseases, autoimmune diseases, and neurodegenerative diseases.

In a further aspect, the present invention relates to a method of preventing or treating a disease, comprising administering a nanomotor, as defined herein, to a patient in need thereof.

In one embodiment, the disease is selected from cancerous diseases, infectious diseases, inflammatory diseases, autoimmune diseases, and neurodegenerative diseases.

In a further aspect, the present invention relates to a use of a nanomotor, as defined herein, for the manufacture of a medicament.

In one embodiment, said medicament is a medicament for preventing or treating a disease selected from cancerous diseases, infectious diseases, inflammatory diseases, autoimmune diseases, and neurodegenerative diseases.

DETAILED DESCRIPTION

DNA nanotechnology provides design opportunities to rationally engineer molecular realizations of actual Brownian ratchet mechanisms. Because of the inherent modularity of DNA-based objects, such motors can be readily integrated into a diversity of contexts to do practically useful work such as a turbine, propulsion, fluid mixer, energy storing device, machine applying mechanical force e.g. on a system coupled to said nanomotor, and/or in chemical synthesis. Here, the inventors describe the design and experimental realization of an artificial rotary nanomotor constructed from DNA. The inventors designed the motor and the energy landscape de novo from first principles based on the concept of a Brownian flashing ratchet, thereby creating a directional motor that surprisingly can rotate with speeds of up to ~ 250 revolutions per minute with a driving mechanism that, unexpectedly, is compellingly simple to implement.

Advantageously, the rotary nanomotors of the invention rotate processively and autonomously. Without wishing to be bound by any theory, the inventors believe that the ratcheting arises from the coupling between symmetry-breaking features in the energy landscape of the motors, e.g. by providing a stator of the motor with a protrusion such that the energy landscape has at least one energy minimum, and a barrier-modulating AC field. Each motor individually breaks the time-reversal symmetry, which the inventors demonstrate by verifying a fluctuation relation that probes their irreversibility. Advantageously, the motors can generate torque against external load, as evidenced by their sustained rotation against viscous drag in solution, and by their capability to wind up a molecular torsion spring. The mechanical energy stored in the spring can then drive the motors into the opposite direction when the barrier modulation is shut off. The nanomotors, system, and method of the invention are thus highly advantageous in that a directional rotation is provided. With speeds up to ~ 250 revolutions per minute and torques created up to 10 pN*nm, the motors' mechanical capabilities surprisingly approach those known thus far only from celebrated biological motors such as F1F0 ATPase. The findings of the inventors open a perspective to create numerous nanomotors, based on straightforwardly designed molecular components that can convert simple-to-implement energy supply into useful work.

The inventors herein show that a three-dimensional realization of a ratchet-shaped motor mechanism can be rationally designed using the methods of DNA nanotechnology. With DNA origami in particular, means for directly tracking experimentally the motions of the motor in real time may be included, which has proven difficult to realize with the smaller chemically synthesized AMM. A *de novo* designed DNA origami motor forms by sequence-programmable self-assembly. For a successful design, it then suffices to simply transmit the sequence information or design, as provided herein, to other users to easily replicate and build their own motors using DNA molecules obtained from commercial sources, and the production can be scaled, which is attractive for future use in technology.

In one embodiment, the term "nanomotor", as used herein, relates to a nanoscale machine designed to convert one or more forms of energy, preferably provided by an alternating current, into mechanical energy. In one embodiment, the nanomotor of the invention is an electric motor using electrical energy to produce mechanical energy, preferably powered by alternating current. In one embodiment, the nanomotor is an autonomously rotating motor. In one embodiment, the nanomotor of the invention differs from nanorotor in that it autonomously rotates, e.g. autonomously rotates in the presence of an alternating current. The nanomotor is advantageous in that, once a system comprising the nanomotor and an alternating current is set up, no external changes such as switching the direction of a direct current or changing the pH, have to be applied to allow for a directional rotation of the nanomotor. Instead, the nanomotor autonomously and directionally rotates, particularly in the presence of the alternating current. The nanomotor of the invention directionally rotates in the presence of an alternating current. Particularly, the nanomotor and system of the invention unexpectedly provide a directional rotation, although the alternating field is zero in the time average. This is in contrast to rotors in the presence of a direct current, since in the presence of a direct current, the direction of rotation is forced on the rotor by the field alignment.

The nanomotor of the invention is advantageous in that it is autonomous to a certain degree, i.e., no external control-system is necessary to update external energy input as a function of the motor's state. In one embodiment, the nanomotor is configured such that said rotor is movable, particularly rotatable, relative to said stator. In one embodiment, the nanomotor is characterized in that the rotor and the stator are connected such that all relative movements of the rotor and the stator are constrained except of a rotation of the rotor within a plane substantially parallel to a first surface of the stator. For example, such connection can be configured by a direct connection, a nucleic acid hinge, and/or the nucleic acid torsional spring. In one embodiment, such connection may additionally or alternatively comprise a mechanic interlocking of said rotor and said stator. In one embodiment, the nanomotor is characterized in that it comprises a rotor and a stator, the stator preferably being a nanostructure having a first surface or being a platform such as a surface of a substrate, wherein the rotor and the stator are connected such that all relative movements of the rotor and the stator are constrained except of a rotation of the rotor within a plane substantially parallel to a first surface of the stator. In a preferred embodiment, both the rotor and the stator are a nucleic acid nanostructure.

In one embodiment, the nanomotor is characterized in that any dimension of the rotor and/or the stator is less than 1000 nm. In one embodiment, the nanomotor is configured such that said rotor is rotatable within an energy landscape defined by a plot of a free energy over a rotor angle $\theta$, wherein said rotor angle $\theta$ is a rotor angle of said longitudinal axis of said rotor with respect to an axis perpendicular to said rotation axis, wherein said energy landscape has at least one energy minimum. In one embodiment, said rotor angle is a rotor angle of said longitudinal axis of said rotor with respect to the direction of an alternating current. In one embodiment, said rotor angle is a rotor angle of said longitudinal axis of said rotor with respect to an axis of a field of an alternating current. In one embodiment, a protrusion is configured such that at least a part of said protrusion extends parallely to said rotation axis. In one embodiment, the nanomotor is configured such that an energy landscape is provided for the rotor which comprises at least one energy minimum, e.g. by providing the nanomotor, preferably the stator, with a protrusion; by providing the stator and/or the rotor with a rough surface; and/or by providing the nanomotor such that there is a rotation imbalance in the rotation of the rotor.

In one embodiment, the rotor which is rotatable within the energy landscape passes through the energy landscape and/or is subjected to the energy within the energy landscape. In one embodiment, the term "free energy" relates to Gibbs free energy. The Gibbs free energy is defined as G(p,T) = H - TS, wherein p is pressure (SI unit: pascal), T is the temperature (SI unit: kelvin), H is the enthalpy (SI unit: joule), and S is the entropy (SI unit: joule per kelvin). In one embodiment, the first surface of the stator is a rough surface configured such that an energy landscape having at least one energy minimum is provided for said rotor. In one embodiment, the nanomotor, particularly the stator, is configured to provide an energy landscape such that the rotor is more likely to rotate in one direction (e.g., clockwise or counterclockwise) than being randomly rotating.

The term "nucleic acid nanomotor", as used herein, relates to a nanomotor comprising or consisting of nucleic acid(s). For example, such nucleic acid nanomotor may comprise a rotor comprising or consisting of nucleic acid(s) and/or may comprise a stator comprising or consisting of nucleic acid(s). In one embodiment, the nanomotor comprises a rotor comprising or consisting of nucleic acid(s) and a stator which is a substrate, e.g. a glass substrate. In a preferred embodiment, the nanomotor comprises a rotor comprising or consisting of nucleic acid(s) and a stator comprising or consisting of nucleic acid(s).

In a preferred embodiment, the nucleic acid nanomotor comprises or consists of one or more nucleic acid nanostructure(s). In one embodiment, term "nanostructure", as used herein, relates to a nucleic acid nanostructure, preferably a DNA-origami structure which is composed of one or multiple DNA-origami subunits (entities). In embodiment, the nanostructure is a DNA origami nanostructure. Readily available nucleic acid nanostructure techniques e.g. DNA origami techniques, which involve comparatively less complex procedures to assemble than standard nanomanufacturing techniques, may be used to manufacture the nanostructure. In one embodiment, the nanostructure is at least partially manufactured using DNA origami techniques. Owing to the self-assembly of DNA origami structures and the readily available software for designing the corresponding scaffolding and staple strands, this may be a comparatively less complex manufacturing process compared to standard nanomanufacturing techniques. In one embodiment, a nanostructure is a DNA origami structure. In one embodiment, a DNA-origami structure comprises at least one scaffolding strand and a plurality of single-stranded oligonucleotide staple strands. In one embodiment, a scaffolding strand makes up and/or traverses the main part of a DNA-origami structure and/or a DNA-origami subunit ("entity"). In one embodiment, an entity is a DNA-origami subunit. The term "staple strand", as used in this invention, shall refer to a single-stranded oligonucleotide molecule, which is at least partially complementary to a scaffolding strand. In general, staple strands can be used to introduce, e.g., coupling sites into a DNA-origami structure and/or a DNA-origami subunit ("entity"), such as coupling sites of the rotor docking site and the stator docking site. In a preferred embodiment, the stator and the rotor are each a DNA-origami structure and/or are comprised by a DNA-origami structure. The nanostructure, e.g. DNA origami nanostructure, may comprise at least one scaffolding strand, i.e. single-stranded polynucleotide scaffold DNA with a known sequence. The DNA origami structure may further comprise a plurality of single-stranded oligonucleotide staple strands, wherein each staple strand may be at least partially complementary to at least one scaffolding strand. Further, each of the staple strands may be configured to bind to the at least one scaffolding strand, wherein the at least one scaffolding strand may be folded and/or arranged such that the desired nanostructure may be formed. The term "strand", as used herein, relate to a nucleic acid strand, e.g. a DNA and/or RNA strand. Such a three-dimensional nanostructure may be realized using DNA origami, i.e. by combining scaffolding strands and staple stands to form the required portions and the overall device. Such designs may for example be performed using software such as caDNAno. That is, a nanostructure comprising multiple portions may in some embodiments be made out of one scaffolding strand, whereas in other embodiments portions of a nanostructure may be constructed utilizing a plurality of scaffolding strands. In one embodiment, the nanomotor comprises any of the following sequences:

- any of the following stator sequences, e.g. stator first domain sequences,
SEQ ID NO.1 (scaffold for pedestal), SEQ ID NO.2 (core_01), SEQ ID NO.3 (core_02), SEQ ID NO.4 (core_03), SEQ ID NO.5 (core_04), SEQ ID NO.6 (core_05), SEQ ID NO.7 (core_06), SEQ ID NO.8 (core_07), SEQ ID NO.9 (core_08), SEQ ID NO.10 (core_09), SEQ ID NO.11 (core_10), SEQ ID NO.12 (core_11), SEQ ID NO.13 (core_12), SEQ ID NO.14 (core_13), SEQ ID NO.15 (core_14), SEQ ID NO.16 (core_15), SEQ ID NO.17 (core_16), SEQ ID NO.18 (core_17), SEQ ID NO.19 (core_18), SEQ ID NO.20 (core_19), SEQ ID NO.21 (core_20), SEQ ID NO.22 (core_21), SEQ ID NO.23 (core_22), SEQ ID NO.24 (core_23), SEQ ID NO.25 (core_24), SEQ ID NO.26 (core_25), SEQ ID NO.27 (core_26), SEQ ID NO.28 (core_27), SEQ ID NO.29 (core_28), SEQ ID NO.30 (core_29), SEQ ID NO.31 (core_30), SEQ ID NO.32 (core_31), SEQ ID NO.33 (core_32), SEQ ID NO.34 (core_33), SEQ ID NO.35 (core_34), SEQ ID NO.36 (core_35), SEQ ID NO.37 (core_36), SEQ ID NO.38 (core_37), SEQ ID NO.39 (core_38), SEQ ID NO.40 (core_39), SEQ ID NO.41 (core_40), SEQ ID NO.42 (core_41), SEQ ID NO.43 (core_42), SEQ ID NO.44 (core_43), SEQ ID NO.45 (core_44), SEQ ID NO.46 (core_45), SEQ ID NO.47 (core_46), SEQ ID NO.48 (core_47), SEQ ID NO.49 (core_48), SEQ ID NO.50 (core_49), SEQ ID NO.51 (core_50), SEQ ID NO.52 (core_51), SEQ ID NO.53 (core_52), SEQ ID NO.54 (core_53), SEQ ID NO.55 (core_54), SEQ ID NO.56 (core_55), SEQ ID NO.57 (core_56), SEQ ID NO.58 (core_57), SEQ ID NO.59 (core_58), SEQ ID NO.60 (core_59), SEQ ID NO.61 (core_60), SEQ ID NO.62 (core_61), SEQ ID NO.63 (core_62), SEQ ID NO.64 (core_63), SEQ ID NO.65 (core_64), SEQ ID NO.66 (core_65), SEQ ID NO.67 (core_66), SEQ ID NO.68 (core_67), SEQ ID NO.69 (core_68), SEQ ID NO.70 (core_69), SEQ ID NO.71 (core_70), SEQ ID NO.72 (core_71), SEQ ID NO.73 (core_72), SEQ ID NO.74 (core_73), SEQ ID NO.75 (core_74), SEQ ID NO.76 (core_75), SEQ ID NO.77 (core_76), SEQ ID NO.78 (core_77), SEQ ID NO.79 (core_78), SEQ ID NO.80 (core_79), SEQ ID NO.81 (core_80), SEQ ID NO.82 (core_81), SEQ ID NO.83 (core_82), SEQ ID NO.84 (core_83), SEQ ID NO.85 (core_84), SEQ ID NO.86 (core_85), SEQ ID NO.87 (core_86), SEQ ID NO.88 (core_87), SEQ ID NO.89 (core_88), SEQ ID NO.90 (core_89), SEQ ID NO.91 (core_90), SEQ ID NO.92 (core_91), SEQ ID NO.93 (core_92), SEQ ID NO.94 (core_93), SEQ ID NO.95 (core_94), SEQ ID NO.96 (core_95), SEQ ID NO.97 (core_96), SEQ ID NO.98 (core_97), SEQ ID NO.99 (core_98), SEQ ID NO.100 (core_99), SEQ ID NO.101 (core_100), SEQ ID NO.102 (core_101), SEQ ID NO.103 (core_102), SEQ ID NO.104 (core_103), SEQ ID NO.105 (core_104), SEQ ID NO.106 (core_105), SEQ ID NO.107 (core_106), SEQ ID NO.108 (core_107), SEQ ID NO.109 (core_108), SEQ ID NO.110 (core_109), SEQ ID NO.111 (core_110), SEQ ID NO.112 (core_111), SEQ ID NO.113 (top_01), SEQ ID NO.114 (top_02), SEQ ID NO.115 (top_03), SEQ ID NO.116 (top_04), SEQ ID NO.117 (top_05), SEQ ID NO.118 (top_06), SEQ ID NO.119 (top_07), SEQ ID NO.120 (top_08), SEQ ID NO.121 (top_09), SEQ ID NO.122 (top_10), SEQ ID NO.123 (top_11), SEQ ID NO.124 (top_12), SEQ ID NO.125 (top_13), SEQ ID NO.126 (top_14), SEQ ID NO.127 (top_15), SEQ ID NO.128 (top_16), SEQ ID NO.129 (top_17), SEQ ID NO.130 (top_18), SEQ ID NO.131 (top_19), SEQ ID NO.132 (top_20), SEQ ID NO.133 (top_21), SEQ ID NO.134 (top_22), SEQ ID NO.135 (top_23), SEQ ID NO.136 (top_24), SEQ ID NO.137 (top_25), SEQ ID NO.138 (top_26), SEQ ID NO.139 (top_27), SEQ ID NO.140 (top_28), SEQ ID NO.141 (top_29), SEQ ID NO.142 (top_30), SEQ ID NO.143 (top_31), SEQ ID NO.144 (top_32), SEQ ID NO.145 (top_33), SEQ ID NO.146 (top_34), SEQ ID NO.147 (top_35), SEQ ID NO.148 (top_36), SEQ ID NO.149 (top_37), SEQ ID NO.150 (top_38), SEQ ID NO.151 (top_39), SEQ ID NO.152 (top_40), SEQ ID NO.153 (top_41), SEQ ID NO.154 (top_42), SEQ ID NO.155 (top_43), SEQ ID NO.156 (bottom_01), SEQ ID NO.157 (bottom_02), SEQ ID NO.158 (bottom_03), SEQ ID NO.159 (bottom_04), SEQ ID NO.160 (bottom_05), SEQ ID NO.161 (bottom_06), SEQ ID NO.162 (bottom_07), SEQ ID NO.163 (bottom_08), SEQ ID NO.164 (bottom_09), SEQ ID NO.165 (bottom_10), SEQ ID NO.166 (bottom_11), SEQ ID NO.167 (bottom_12), SEQ ID NO.168 (bottom_13), SEQ ID NO.169 (bottom_14), SEQ ID NO.170 (bottom_15), SEQ ID NO.171 (bottom_16), SEQ ID NO.172 (bottom_17), SEQ ID NO.173 (bottom_18), SEQ ID NO.174 (bottom_19), SEQ ID NO.175 (bottom_20), SEQ ID NO.176 (bottom_21), SEQ ID NO.177 (bottom_22), SEQ ID NO.178 (bottom_23), SEQ ID NO.179 (bottom_24), SEQ ID NO.180 (bottom_25), SEQ ID NO.181 (bottom_26), SEQ ID NO.182 (bottom_27), SEQ ID NO.183 (bottom_28), SEQ ID NO.184 (bottom_29), SEQ ID NO.185 (bottom_30), SEQ ID NO.186 (bottom_31), SEQ ID NO.187 (bottom_32), SEQ ID NO.188 (bottom_33), SEQ ID NO.189 (bottom_34), SEQ ID NO.190 (bottom_35), SEQ ID NO.191 (bottom_36), SEQ ID NO.192 (bottom_37), SEQ ID NO.193 (bottom_38), SEQ ID NO.194 (bottom_39), SEQ ID NO.195 (bottom_40), SEQ ID NO.196 (bottom_41), SEQ ID NO.197 (bottom_42), SEQ ID NO.198 (connection_to_triangle_01), SEQ ID NO.199 (connection_to_triangle_02), SEQ ID NO.200 (connection_to_triangle_03), SEQ ID NO.201 (connection_to_triangle_04), SEQ ID NO.202 (connection_to_triangle_05), SEQ ID NO.203 (connection_to_triangle_06), SEQ ID NO.204 (connection_to_triangle_07), SEQ ID NO.205 (connection_to_triangle_08), SEQ ID NO.206 (connection_to_triangle_09), SEQ ID NO.207 (connection_to_triangle_10), SEQ ID NO.208 (connection_to_triangle_11), SEQ ID NO.209 (connection_to_triangle_12), SEQ ID NO.210 (for_biotin_anchor_01), SEQ ID NO.211 (for_biotin_anchor_02), SEQ ID NO.212 (for_biotin_anchor_03), SEQ ID NO.213 (for_biotin_anchor_04), SEQ ID NO.214 (for_biotin_anchor_05), SEQ ID NO.215 (for_biotin_anchor_06), SEQ ID NO.216 (for_biotin_anchor_07), SEQ ID NO.217 (for_biotin_anchor_08), SEQ ID NO.218 (for_biotin_anchor_09), SEQ ID NO.219 (rotor_arm_dock_01), SEQ ID NO.220 (rotor_arm_dock_02), SEQ ID NO.221 (rotor_arm_dock_03), SEQ ID NO.222 (rotor_arm_dock_04), SEQ ID NO.223 (rotor_arm_dock_05), SEQ ID NO.224 (rotor_arm_dock_06),

- any of the following stator sequences, e.g. stator second domain sequences,
SEQ ID NO.225 (side1_01), SEQ ID NO.226 (side1_02), SEQ ID NO.227 (side1_03), SEQ ID NO.228 (side1_04), SEQ ID NO.229 (side1_05), SEQ ID NO.230 (side1_06), SEQ ID NO.231 (side1_07), SEQ ID NO.232 (side1_08), SEQ ID NO.233 (side1_09), SEQ ID NO.234 (side1_10), SEQ ID NO.235 (side1_11), SEQ ID NO.236 (side1_12), SEQ ID NO.237 (side1_13), SEQ ID NO.238 (side1_14), SEQ ID NO.239 (side1_15), SEQ ID NO.240 (side1_16), SEQ ID NO.241 (side1_17), SEQ ID NO.242 (side1_18), SEQ ID NO.243 (side1_19), SEQ ID NO.244 (side1_20), SEQ ID NO.245 (side1_21), SEQ ID NO.246 (side1_22), SEQ ID NO.247 (side1_23), SEQ ID NO.248 (side1_24), SEQ ID NO.249 (side1_25), SEQ ID NO.250 (side1_26), SEQ ID NO.251 (side1_27), SEQ ID NO.252 (side1_28), SEQ ID NO.253 (side1_29), SEQ ID NO.254 (side1_30), SEQ ID NO.255 (side1_31), SEQ ID NO.256 (side1_32), SEQ ID NO.257 (side1_33), SEQ ID NO.258 (side1_34), SEQ ID NO.259 (side1_35), SEQ ID NO.260 (side1_36), SEQ ID NO.261 (side1_37), SEQ ID NO.262 (side1_38), SEQ ID NO.263 (side1_39), SEQ ID NO.264 (side1_40), SEQ ID NO.265 (side1_41), SEQ ID NO.266 (side1_42), SEQ ID NO.267 (side1_43), SEQ ID NO.268 (side1_44), SEQ ID NO.269 (side1_45), SEQ ID NO.270 (side1_46), SEQ ID NO.271 (side2_01), SEQ ID NO.272 (side2_02), SEQ ID NO.273 (side2_03), SEQ ID NO.274 (side2_04), SEQ ID NO.275 (side2_05), SEQ ID NO.276 (side2_06), SEQ ID NO.277 (side2_07), SEQ ID NO.278 (side2_08), SEQ ID NO.279 (side2_09), SEQ ID NO.280 (side2_10), SEQ ID NO.281 (side2_11), SEQ ID NO.282 (side2_12), SEQ ID NO.283 (side2_13), SEQ ID NO.284 (side2_14), SEQ ID NO.285 (side2_15), SEQ ID NO.286 (side2_16), SEQ ID NO.287 (side2_17), SEQ ID NO.288 (side2_18), SEQ ID NO.289 (side2_19), SEQ ID NO.290 (side2_20), SEQ ID NO.291 (side2_21), SEQ ID NO.292 (side2_22), SEQ ID NO.293 (side2_23), SEQ ID NO.294 (side2_24), SEQ ID NO.295 (side2_25), SEQ ID NO.296 (side2_26), SEQ ID NO.297 (side2_27), SEQ ID NO.298 (side2_28), SEQ ID NO.299 (side2_29), SEQ ID NO.300 (side2_30), SEQ ID NO.301 (side2_31), SEQ ID NO.302 (side2_32), SEQ ID NO.303 (side2_33), SEQ ID NO.304 (side2_34), SEQ ID NO.305 (side2_35), SEQ ID NO.306 (side2_36), SEQ ID NO.307 (side2_37), SEQ ID NO.308 (side2_38), SEQ ID NO.309 (side2_39), SEQ ID NO.310 (side2_40), SEQ ID NO.311 (side2_41), SEQ ID NO.312 (side2_42), SEQ ID NO.313 (side2_43), SEQ ID NO.314 (side2_44), SEQ ID NO.315 (side2_45), SEQ ID NO.316 (side2_46), SEQ ID NO.317 (side2_47), SEQ ID NO.318 (side3_01), SEQ ID NO.319 (side3_02), SEQ ID NO.320 (side3_03), SEQ ID NO.321 (side3_04), SEQ ID NO.322 (side3_05), SEQ ID NO.323 (side3_06), SEQ ID NO.324 (side3_07), SEQ ID NO.325 (side3_08), SEQ ID NO.326 (side3_09), SEQ ID NO.327 (side3_10), SEQ ID NO.328 (side3_11), SEQ ID NO.329 (side3_12), SEQ ID NO.330 (side3_13), SEQ ID NO.331 (side3_14), SEQ ID NO.332 (side3_15), SEQ ID NO.333 (side3_16), SEQ ID NO.334 (side3_17), SEQ ID NO.335 (side3_18), SEQ ID NO.336 (side3_19), SEQ ID NO.337 (side3_20), SEQ ID NO.338 (side3_21), SEQ ID NO.339 (side3_22), SEQ ID NO.340 (side3_23), SEQ ID NO.341 (side3_24), SEQ ID NO.342 (side3_25), SEQ ID NO.343 (side3_26), SEQ ID NO.344 (side3_27), SEQ ID NO.345 (side3_28), SEQ ID NO.346 (side3_29), SEQ ID NO.347 (side3_30), SEQ ID NO.348 (side3_31), SEQ ID NO.349 (side3_32), SEQ ID NO.350 (side3_33), SEQ ID NO.351 (side3_34), SEQ ID NO.352 (side3_35), SEQ ID NO.353 (side3_36), SEQ ID NO.354 (side3_37), SEQ ID NO.355 (side3_38), SEQ ID NO.356 (side3_39), SEQ ID NO.357 (side3_40), SEQ ID NO.358 (side3_41), SEQ ID NO.359 (side3_42), SEQ ID NO.360 (side3_43), SEQ ID NO.361 (side3_44), SEQ ID NO.362 (side3_45), SEQ ID NO.363 (side3_46), SEQ ID NO.364 (side3_47), SEQ ID NO.365 (side3_48), SEQ ID NO.366 (corner_3.1_01), SEQ ID NO.367 (corner_3.1_02), SEQ ID NO.368 (corner_3.1_03), SEQ ID NO.369 (corner_3.1_04), SEQ ID NO.370 (corner_3.1_05), SEQ ID NO.371 (corner_3.1_06), SEQ ID NO.372 (corner_3.1_07), SEQ ID NO.373 (corner_3.1_08), SEQ ID NO.374 (corner_3.1_09), SEQ ID NO.375 (corner_3.1_10), SEQ ID NO.376 (corner_3.1_11), SEQ ID NO.377 (corner_3.1_12), SEQ ID NO.378 (corner_3.1_13), SEQ ID NO.379 (corner_3.1_14), SEQ ID NO.380 (corner_3.1_PAINT_pos_01), SEQ ID NO.381 (corner_3.1_PAINT_pos_02), SEQ ID NO.382 (corner_3.1_PAINT_pos_03), SEQ ID NO.383 (corner_1.2_01), SEQ ID NO.384 (corner_1.2_02), SEQ ID NO.385 (corner_1.2_03), SEQ ID NO.386 (corner_1.2_04), SEQ ID NO.387 (corner_1.2_05), SEQ ID NO.388 (corner_1.2_06), SEQ ID NO.389 (corner_1.2_07), SEQ ID NO.390 (corner_1.2_08), SEQ ID NO.391 (corner_1.2_09), SEQ ID NO.392 (corner_1.2_10), SEQ ID NO.393 (corner_1.2_11), SEQ ID NO.394 (corner_1.2_12), SEQ ID NO.395 (corner_1.2_PAINT_pos_01), SEQ ID NO.396 (corner_1.2_PAINT_pos_02), SEQ ID NO.397 (corner_1.2_PAINT_pos_03), SEQ ID NO.398 (corner_2.3_01), SEQ ID NO.399 (corner_2.3_02), SEQ ID NO.400 (corner_2.3_03), SEQ ID NO.401 (corner_2.3_04), SEQ ID NO.402 (corner_2.3_05), SEQ ID NO.403 (corner_2.3_06), SEQ ID NO.404 (corner_2.3_07), SEQ ID NO.405 (corner_2.3_08), SEQ ID NO.406 (corner_2.3_09), SEQ ID NO.407 (corner_2.3_10), SEQ ID NO.408 (corner_2.3_11), SEQ ID NO.409 (corner_2.3_12), SEQ ID NO.410 (corner_2.3_13), SEQ ID NO.411 (corner_2.3_14), SEQ ID NO.412 (corner_2.3_18), SEQ ID NO.413 (corner_2.3_PAINT_pos_01), SEQ ID NO.414 (corner_2.3_PAINT_pos_02), SEQ ID NO.415 (corner_2.3_PAINT_pos_03), SEQ ID NO.416 (obstacle1_01), SEQ ID NO.417 (obstacle1_02), SEQ ID NO.418 (obstacle1_03), SEQ ID NO.419 (obstacle1_04), SEQ ID NO.420 (obstacle1_05), SEQ ID NO.421 (obstacle1_06), SEQ ID NO.422 (obstacle1_07), SEQ ID NO.423 (obstacle1_08), SEQ ID NO.424 (obstacle1_09), SEQ ID NO.425 (spacer1_01), SEQ ID NO.426 (spacer1_02), SEQ ID NO.427 (obstacle2_01), SEQ ID NO.428 (obstacle2_02), SEQ ID NO.429 (obstacle2_03), SEQ ID NO.430 (obstacle2_04), SEQ ID NO.431 (obstacle2_05), SEQ ID NO.432 (obstacle2_06), SEQ ID NO.433 (obstacle2_07), SEQ ID NO.434 (obstacle2_08), SEQ ID NO.435 (obstacle2_09), SEQ ID NO.436 (obstacle2_10), SEQ ID NO.437 (spacer2_01), SEQ ID NO.438 (spacer2_02), SEQ ID NO.439 (obstacle3_01), SEQ ID NO.440 (obstacle3_02), SEQ ID NO.441 (obstacle3_03), SEQ ID NO.442 (obstacle3_04), SEQ ID NO.443 (obstacle3_05), SEQ ID NO.444 (obstacle3_06), SEQ ID NO.445 (obstacle3_07), SEQ ID NO.446 (obstacle3_08), SEQ ID NO.447 (obstacle3_09), SEQ ID NO.448 (spacer3_01), SEQ ID NO.449 (spacer3_02), SEQ ID NO.450 (spacer_complement_01), SEQ ID NO.451 (spacer_complement_02), SEQ ID NO.452 (corner_3.1_ for PAINT_01), SEQ ID NO.453 (corner_3.1_ for PAINT_02), SEQ ID NO.454 (corner_3.1_ for PAINT_03), SEQ ID NO.455 (corner_3.1_ for PAINT_04), SEQ ID NO.456 (corner_1.2_ for PAINT_01), SEQ ID NO.457 (corner_1.2_ for PAINT_02), SEQ ID NO.458 (corner_1.2_ for PAINT_03), SEQ ID NO.459 (corner_1.2_ for PAINT_04), SEQ ID NO.460 (corner_1.2_ for PAINT_05), SEQ ID NO.461 (corner_2.3_ for PAINT_01), SEQ ID NO.462 (corner_2.3_ for PAINT_02), SEQ ID NO.463 (corner_2.3_ for PAINT_03), SEQ ID NO.464 (corner_2.3_ for PAINT_04), SEQ ID NO.465 (PAINT_Atto655_imager),

- any of the following rotor sequences
SEQ ID NO.466 (core_01), SEQ ID NO.467 (core_02), SEQ ID NO.468 (core_03), SEQ ID NO.469 (core_04), SEQ ID NO.470 (core_05), SEQ ID NO.471 (core_06), SEQ ID NO.472 (core_07), SEQ ID NO.473 (core_08), SEQ ID NO.474 (core_09), SEQ ID NO.475 (core_10), SEQ ID NO.476 (core_11), SEQ ID NO.477 (core_12), SEQ ID NO.478 (core_13), SEQ ID NO.479 (core_14), SEQ ID NO.480 (core_15), SEQ ID NO.481 (core_16), SEQ ID NO.482 (core_17), SEQ ID NO.483 (core_18), SEQ ID NO.484 (core_19), SEQ ID NO.485 (core_20), SEQ ID NO.486 (core_21), SEQ ID NO.487 (core_22), SEQ ID NO.488 (core_23), SEQ ID NO.489 (core_24), SEQ ID NO.490 (core_25), SEQ ID NO.491 (core_26), SEQ ID NO.492 (core_27), SEQ ID NO.493 (core_28), SEQ ID NO.494 (core_29), SEQ ID NO.495 (core_30), SEQ ID NO.496 (core_31), SEQ ID NO.497 (core_32), SEQ ID NO.498 (core_33), SEQ ID NO.499 (core_34), SEQ ID NO.500 (core_35), SEQ ID NO.501 (core_36), SEQ ID NO.502 (core_37), SEQ ID NO.503 (core_38), SEQ ID NO.504 (core_39), SEQ ID NO.505 (core_40), SEQ ID NO.506 (core_41), SEQ ID NO.507 (core_42), SEQ ID NO.508 (core_43), SEQ ID NO.509 (core_44), SEQ ID NO.510 (core_45), SEQ ID NO.511 (core_46), SEQ ID NO.512 (core_47), SEQ ID NO.513 (core_48), SEQ ID NO.514 (core_49), SEQ ID NO.515 (core_50), SEQ ID NO.516 (core_51), SEQ ID NO.517 (core_52), SEQ ID NO.518 (core_53), SEQ ID NO.519 (core_54), SEQ ID NO.520 (core_55), SEQ ID NO.521 (core_56), SEQ ID NO.522 (core_57), SEQ ID NO.523 (core_58), SEQ ID NO.524 (core_59), SEQ ID NO.525 (core_60), SEQ ID NO.526 (core_61), SEQ ID NO.527 (core_62), SEQ ID NO.528 (core_63), SEQ ID NO.529 (core_64), SEQ ID NO.530 (core_65), SEQ ID NO.531 (core_66), SEQ ID NO.532 (core_67), SEQ ID NO.533 (core_68), SEQ ID NO.534 (core_69), SEQ ID NO.535 (core_70), SEQ ID NO.536 (core_71), SEQ ID NO.537 (core_72), SEQ ID NO.538 (core_73), SEQ ID NO.539 (core_74), SEQ ID NO.540 (core_75), SEQ ID NO.541 (core_76), SEQ ID NO.542 (core_77), SEQ ID NO.543 (core_78), SEQ ID NO.544 (core_79), SEQ ID NO.545 (core_80), SEQ ID NO.546 (core_81), SEQ ID NO.547 (core_82), SEQ ID NO.548 (core_83), SEQ ID NO.549 (core_84), SEQ ID NO.550 (core_85), SEQ ID NO.551 (core_86), SEQ ID NO.552 (core_87), SEQ ID NO.553 (core_88), SEQ ID NO.554 (core_89), SEQ ID NO.555 (core_90), SEQ ID NO.556 (core_91), SEQ ID NO.557 (core_92), SEQ ID NO.558 (core_93), SEQ ID NO.559 (core_94), SEQ ID NO.560 (core_95), SEQ ID NO.561 (core_96), SEQ ID NO.562 (core_97), SEQ ID NO.563 (core_98), SEQ ID NO.564 (core_99), SEQ ID NO.565 (core_100), SEQ ID NO.566 (core_101), SEQ ID NO.567 (core_102), SEQ ID NO.568 (core_103), SEQ ID NO.569 (core_104), SEQ ID NO.570 (core_105), SEQ ID NO.571 (core_106), SEQ ID NO.572 (core_107), SEQ ID NO.573 (core_108), SEQ ID NO.574 (core_109), SEQ ID NO.575 (core_110), SEQ ID NO.576 (core_111), SEQ ID NO.577 (core_112), SEQ ID NO.578 (core_113), SEQ ID NO.579 (core_114), SEQ ID NO.580 (core_115), SEQ ID NO.581 (core_116), SEQ ID NO.582 (core_117), SEQ ID NO.583 (core_118), SEQ ID NO.584 (core_119), SEQ ID NO.585 (core_120), SEQ ID NO.586 (core_121), SEQ ID NO.587 (core_122), SEQ ID NO.588 (core_123), SEQ ID NO.589 (core_124), SEQ ID NO.590 (core_125), SEQ ID NO.591 (core_126), SEQ ID NO.592 (core_127), SEQ ID NO.593 (core_128), SEQ ID NO.594 (core_129), SEQ ID NO.595 (core_130), SEQ ID NO.596 (core_131), SEQ ID NO.597 (core_132), SEQ ID NO.598 (core_133), SEQ ID NO.599 (core_134), SEQ ID NO.600 (core_135), SEQ ID NO.601 (core_136), SEQ ID NO.602 (core_137), SEQ ID NO.603 (core_138), SEQ ID NO.604 (core_139), SEQ ID NO.605 (core_140), SEQ ID NO.606 (core_141), SEQ ID NO.607 (core_142), SEQ ID NO.608 (core_143), SEQ ID NO.609 (core_144), SEQ ID NO.610 (core_145), SEQ ID NO.611 (core_146), SEQ ID NO.612 (core_147), SEQ ID NO.613 (core_148), SEQ ID NO.614 (core_149), SEQ ID NO.615 (core_150), SEQ ID NO.616 (core_151), SEQ ID NO.617 (core_152), SEQ ID NO.618 (core_153), SEQ ID NO.619 (core_154), SEQ ID NO.620 (core_155), SEQ ID NO.621 (core_156), SEQ ID NO.622 (core_157), SEQ ID NO.623 (core_158), SEQ ID NO.624 (core_159), SEQ ID NO.625 (core_160), SEQ ID NO.626 (core_161), SEQ ID NO.627 (core_162), SEQ ID NO.628 (core_163), SEQ ID NO.629 (core_164), SEQ ID NO.630 (core_165), SEQ ID NO.631 (core_166), SEQ ID NO.632 (core_167), SEQ ID NO.633 (core_168), SEQ ID NO.634 (core_169), SEQ ID NO.635 (core_170), SEQ ID NO.636 (core_171), SEQ ID NO.637 (core_172), SEQ ID NO.638 (core_173), SEQ ID NO.639 (core_174), SEQ ID NO.640 (core_175), SEQ ID NO.641 (core_176), SEQ ID NO.642 (core_177), SEQ ID NO.643 (core_178), SEQ ID NO.644 (core_179), SEQ ID NO.645 (core_180), SEQ ID NO.646 (core_181), SEQ ID NO.647 (core_182), SEQ ID NO.648 (core_183), SEQ ID NO.649 (core_184), SEQ ID NO.650 (core_185), SEQ ID NO.651 (core_186), SEQ ID NO.652 (core_187), SEQ ID NO.653 (core_188), SEQ ID NO.654 (core_189), SEQ ID NO.655 (rotorend_01), SEQ ID NO.656 (rotorend_02), SEQ ID NO.657 (rotorend_03), SEQ ID NO.658 (rotorend_04), SEQ ID NO.659 (rotorend_05), SEQ ID NO.660 (rotorend_06), SEQ ID NO.661 (rotorend_07), SEQ ID NO.662 (connection_to_pedestal_01), SEQ ID NO.663 (connection_to_pedestal_02), SEQ ID NO.664 (connection_to_pedestal_03), SEQ ID NO.665 (connection_to_pedestal_04), SEQ ID NO.666 (connection_to_pedestal_05), SEQ ID NO.667 (connection_to_pedestal_06), SEQ ID NO.668 (connection_to_pedestal_07), SEQ ID NO.669 (connection_to_pedestal_08), SEQ ID NO.670 (connection_to_pedestal_09), SEQ ID NO.671 (connection_to_pedestal_w_spring_01), SEQ ID NO.672 (connection_to_pedestal_w_spring_02), SEQ ID NO.673 (connection_to_pedestal_w_spring_03), SEQ ID NO.674 (connection_to_pedestal_w_spring_04), SEQ ID NO.675 (connection_to_pedestal_w_spring_05), SEQ ID NO.676 (connection_to_pedestal_w_spring_06), SEQ ID NO.677 (connection_to_pedestal_w_spring_07), SEQ ID NO.678 (connection_to_pedestal_w_spring_08), SEQ ID NO.679 (connection_to_pedestal_w_spring_09), SEQ ID NO.680 (core_01), SEQ ID NO.681 (core_02), SEQ ID NO.682 (core_03), SEQ ID NO.683 (core_04), SEQ ID NO.684 (core_05), SEQ ID NO.685 (core_06), SEQ ID NO.686 (core_07), SEQ ID NO.687 (core_08), SEQ ID NO.688 (core_09), SEQ ID NO.689 (core_10), SEQ ID NO.690 (core_11), SEQ ID NO.691 (core_12), SEQ ID NO.692 (core_13), SEQ ID NO.693 (core_14), SEQ ID NO.694 (core_15), SEQ ID NO.695 (core_16), SEQ ID NO.696 (core_17), SEQ ID NO.697 (core_18), SEQ ID NO.698 (core_19), SEQ ID NO.699 (core_20), SEQ ID NO.700 (core_21), SEQ ID NO.701 (core_22), SEQ ID NO.702 (core_23), SEQ ID NO.703 (core_24), SEQ ID NO.704 (core_25), SEQ ID NO.705 (core_26), SEQ ID NO.706 (core_27), SEQ ID NO.707 (core_28), SEQ ID NO.708 (core_29), SEQ ID NO.709 (core_30), SEQ ID NO.710 (core_31), SEQ ID NO.711 (core_32), SEQ ID NO.712 (core_33), SEQ ID NO.713 (core_34), SEQ ID NO.714 (core_35), SEQ ID NO.715 (core_36), SEQ ID NO.716 (core_37), SEQ ID NO.717 (core_38), SEQ ID NO.718 (core_39), SEQ ID NO.719 (core_40), SEQ ID NO.720 (core_41), SEQ ID NO.721 (core_42), SEQ ID NO.722 (core_43), SEQ ID NO.723 (core_44), SEQ ID NO.724 (core_45), SEQ ID NO.725 (core_46), SEQ ID NO.726 (core_47), SEQ ID NO.727 (core_48), SEQ ID NO.728 (core_49), SEQ ID NO.729 (core_50), SEQ ID NO.730 (core_51), SEQ ID NO.731 (core_52), SEQ ID NO.732 (core_53), SEQ ID NO.733 (core_54), SEQ ID NO.734 (core_55), SEQ ID NO.735 (core_56), SEQ ID NO.736 (core_57), SEQ ID NO.737 (core_58), SEQ ID NO.738 (core_59), SEQ ID NO.739 (core_60), SEQ ID NO.740 (core_61), SEQ ID NO.741 (core_62), SEQ ID NO.742 (core_63), SEQ ID NO.743 (core_64), SEQ ID NO.744 (core_65), SEQ ID NO.745 (core_66), SEQ ID NO.746 (core_67), SEQ ID NO.747 (core_68), SEQ ID NO.748 (core_69), SEQ ID NO.749 (core_70), SEQ ID NO.750 (core_71), SEQ ID NO.751 (core_72), SEQ ID NO.752 (core_73), SEQ ID NO.753 (core_74), SEQ ID NO.754 (core_75), SEQ ID NO.755 (core_76), SEQ ID NO.756 (core_77), SEQ ID NO.757 (core_78), SEQ ID NO.758 (core_79), SEQ ID NO.759 (core_80), SEQ ID NO.760 (core_81), SEQ ID NO.761 (core_82), SEQ ID NO.762 (core_83), SEQ ID NO.763 (core_84), SEQ ID NO.764 (core_85), SEQ ID NO.765 (core_86), SEQ ID NO.766 (core_87), SEQ ID NO.767 (core_88), SEQ ID NO.768 (core_89), SEQ ID NO.769 (core_90), SEQ ID NO.770 (core_91), SEQ ID NO.771 (core_92), SEQ ID NO.772 (core_93), SEQ ID NO.773 (core_94), SEQ ID NO.774 (core_95), SEQ ID NO.775 (core_96), SEQ ID NO.776 (core_97), SEQ ID NO.777 (core_98), SEQ ID NO.778 (core_99), SEQ ID NO.779 (core_100), SEQ ID NO.780 (core_101), SEQ ID NO.781 (core_102), SEQ ID NO.782 (core_103), SEQ ID NO.783 (core_104), SEQ ID NO.784 (core_105), SEQ ID NO.785 (core_106), SEQ ID NO.786 (core_107), SEQ ID NO.787 (core_108), SEQ ID NO.788 (core_109), SEQ ID NO.789 (core_110), SEQ ID NO.790 (core_111), SEQ ID NO.791 (core_112), SEQ ID NO.792 (core_113), SEQ ID NO.793 (core_114), SEQ ID NO.794 (core_115), SEQ ID NO.795 (core_116), SEQ ID NO.796 (core_117), SEQ ID NO.797 (core_118), SEQ ID NO.798 (core_119), SEQ ID NO.799 (core_120), SEQ ID NO.800 (core_121), SEQ ID NO.801 (core_122), SEQ ID NO.802 (core_123), SEQ ID NO.803 (core_124), SEQ ID NO.804 (core_125), SEQ ID NO.805 (core_126), SEQ ID NO.806 (core_127), SEQ ID NO.807 (core_128), SEQ ID NO.808 (core_129), SEQ ID NO.809 (core_130), SEQ ID NO.810 (core_131), SEQ ID NO.811 (core_132), SEQ ID NO.812 (core_133), SEQ ID NO.813 (core_134), SEQ ID NO.814 (core_135), SEQ ID NO.815 (core_136), SEQ ID NO.816 (core_137), SEQ ID NO.817 (core_138), SEQ ID NO.818 (core_139), SEQ ID NO.819 (core_140), SEQ ID NO.820 (core_141), SEQ ID NO.821 (core_142), SEQ ID NO.822 (core_143), SEQ ID NO.823 (core_144), SEQ ID NO.824 (core_145), SEQ ID NO.825 (core_146), SEQ ID NO.826 (core_147), SEQ ID NO.827 (core_148), SEQ ID NO.828 (core_149), SEQ ID NO.829 (core_150), SEQ ID NO.830 (core_151), SEQ ID NO.831 (core_152), SEQ ID NO.832 (core_153), SEQ ID NO.833 (core_154), SEQ ID NO.834 (core_155), SEQ ID NO.835 (core_156), SEQ ID NO.836 (core_157), SEQ ID NO.837 (core_158), SEQ ID NO.838 (core_159), SEQ ID NO.839 (core_160), SEQ ID NO.840 (core_161), SEQ ID NO.841 (core_162), SEQ ID NO.842 (core_163), SEQ ID NO.843 (core_164), SEQ ID NO.844 (core_165), SEQ ID NO.845 (core_166), SEQ ID NO.846 (core_167), SEQ ID NO.847 (core_168), SEQ ID NO.848 (core_169), SEQ ID NO.849 (core_170), SEQ ID NO.850 (core_171), SEQ ID NO.851 (core_172), SEQ ID NO.852 (core_173), SEQ ID NO.853 (core_174), SEQ ID NO.854 (core_175), SEQ ID NO.855 (core_176), SEQ ID NO.856 (core_177), SEQ ID NO.857 (core_178), SEQ ID NO.858 (core_179), SEQ ID NO.859 (core_180), SEQ ID NO.860 (core_181), SEQ ID NO.861 (core_182), SEQ ID NO.862 (core_183), SEQ ID NO.863 (core_184), SEQ ID NO.864 (core_185), SEQ ID NO.865 (core_186), SEQ ID NO.866 (core_187), SEQ ID NO.867 (core_188), SEQ ID NO.868 (core_189), SEQ ID NO.869 (core_190), SEQ ID NO.870 (core_191), SEQ ID NO.871 (core_192), SEQ ID NO.872 (core_193), SEQ ID NO.873 (core_194), SEQ ID NO.874 (core_195), SEQ ID NO.875 (core_196), SEQ ID NO.876 (core_197), SEQ ID NO.877 (tip_dye_01), SEQ ID NO.878 (tip_dye_02), SEQ ID NO.879 (tip_dye_03), SEQ ID NO.880 (tip_dye_04), SEQ ID NO.881 (tip_dye_05), SEQ ID NO.882 (tip_dye_06), SEQ ID NO.883 (tip_dye_07), SEQ ID NO.884 (tip_dye_08), SEQ ID NO.885 (tip_dye_09), SEQ ID NO.886 (tip_dye_10), SEQ ID NO.887 (connection_betw._rotor_arms_01), SEQ ID NO.888 (connection_betw._rotor_arms_02), SEQ ID NO.889 (connection_betw._rotor_arms_03), SEQ ID NO.890 (connection_betw._rotor_arms_04), SEQ ID NO.891 (connection_betw._rotor_arms_05), SEQ ID NO.892 (connection_betw._rotor_arms_06), and/or

- any of the following stator sequences, e.g. stator with torsional spring sequences,
SEQ ID NO.893 (core_01), SEQ ID NO.894 (core_02), SEQ ID NO.895 (core_03), SEQ ID NO.896 (core_04), SEQ ID NO.897 (core_05), SEQ ID NO.898 (core_06), SEQ ID NO.899 (core_07), SEQ ID NO.900 (core_08), SEQ ID NO.901 (core_09), SEQ ID NO.902 (core_10), SEQ ID NO.903 (core_11), SEQ ID NO.904 (core_12), SEQ ID NO.905 (core_13), SEQ ID NO.906 (core_14), SEQ ID NO.907 (core_15), SEQ ID NO.908 (core_16), SEQ ID NO.909 (core_17), SEQ ID NO.910 (core_18), SEQ ID NO.911 (core_19), SEQ ID NO.912 (core_20), SEQ ID NO.913 (core_21), SEQ ID NO.914 (core_22), SEQ ID NO.915 (core_23), SEQ ID NO.916 (core_24), SEQ ID NO.917 (core_25), SEQ ID NO.918 (core_26), SEQ ID NO.919 (core_27), SEQ ID NO.920 (core_28), SEQ ID NO.921 (core_29), SEQ ID NO.922 (core_30), SEQ ID NO.923 (core_31), SEQ ID NO.924 (core_32), SEQ ID NO.925 (core_33), SEQ ID NO.926 (core_34), SEQ ID NO.927 (core_35), SEQ ID NO.928 (core_36), SEQ ID NO.929 (core_37), SEQ ID NO.930 (core_38), SEQ ID NO.931 (core_39), SEQ ID NO.932 (core_40), SEQ ID NO.933 (core_41), SEQ ID NO.934 (core_42), SEQ ID NO.935 (core_43), SEQ ID NO.936 (core_44), SEQ ID NO.937 (core_45), SEQ ID NO.938 (core_46), SEQ ID NO.939 (core_47), SEQ ID NO.940 (core_48), SEQ ID NO.941 (core_49), SEQ ID NO.942 (core_50), SEQ ID NO.943 (core_51), SEQ ID NO.944 (core_52), SEQ ID NO.945 (core_53), SEQ ID NO.946 (core_54), SEQ ID NO.947 (core_55), SEQ ID NO.948 (core_56), SEQ ID NO.949 (core_57), SEQ ID NO.950 (core_58), SEQ ID NO.951 (core_59), SEQ ID NO.952 (core_60), SEQ ID NO.953 (core_61), SEQ ID NO.954 (core_62), SEQ ID NO.955 (core_63), SEQ ID NO.956 (core_64), SEQ ID NO.957 (core_65), SEQ ID NO.958 (core_66), SEQ ID NO.959 (core_67), SEQ ID NO.960 (core_68), SEQ ID NO.961 (core_69), SEQ ID NO.962 (core_70), SEQ ID NO.963 (core_71), SEQ ID NO.964 (core_72), SEQ ID NO.965 (core_73), SEQ ID NO.966 (core_74), SEQ ID NO.967 (core_75), SEQ ID NO.968 (core_76), SEQ ID NO.969 (core_77), SEQ ID NO.970 (core_78), SEQ ID NO.971 (core_79), SEQ ID NO.972 (core_80), SEQ ID NO.973 (core_81), SEQ ID NO.974 (core_82), SEQ ID NO.975 (core_83), SEQ ID NO.976 (core_84), SEQ ID NO.977 (core_85), SEQ ID NO.978 (core_86), SEQ ID NO.979 (core_87), SEQ ID NO.980 (core_88), SEQ ID NO.981 (core_89), SEQ ID NO.982 (core_90), SEQ ID NO.983 (core_91), SEQ ID NO.984 (core_92), SEQ ID NO.985 (core_93), SEQ ID NO.986 (core_94), SEQ ID NO.987 (core_95), SEQ ID NO.988 (core_96), SEQ ID NO.989 (core_97), SEQ ID NO.990 (core_98), SEQ ID NO.991 (core_99), SEQ ID NO.992 (core_100), SEQ ID NO.993 (core_101), SEQ ID NO.994 (core_102), SEQ ID NO.995 (core_103), SEQ ID NO.996 (core_104), SEQ ID NO.997 (core_105), SEQ ID NO.998 (core_106), SEQ ID NO.999 (core_107), SEQ ID NO.1000 (core_108), SEQ ID NO.1001 (core_109), SEQ ID NO.1002 (core_110), SEQ ID NO.1003 (core_111), SEQ ID NO.1004 (core_112), SEQ ID NO.1005 (core_113), SEQ ID NO.1006 (core_114), SEQ ID NO.1007 (core_115), SEQ ID NO.1008 (core_116), SEQ ID NO.1009 (top_01), SEQ ID NO.1010 (top_02), SEQ ID NO.1011 (top_03), SEQ ID NO.1012 (top_04), SEQ ID NO.1013 (top_05), SEQ ID NO.1014 (top_06), SEQ ID NO.1015 (top_07), SEQ ID NO.1016 (top_08), SEQ ID NO.1017 (top_09), SEQ ID NO.1018 (top_10), SEQ ID NO.1019 (top_11), SEQ ID NO.1020 (top_12), SEQ ID NO.1021 (top_13), SEQ ID NO.1022 (top_14), SEQ ID NO.1023 (top_15), SEQ ID NO.1024 (top_16), SEQ ID NO.1025 (top_17), SEQ ID NO.1026 (top_18), SEQ ID NO.1027 (top_19), SEQ ID NO.1028 (top_20), SEQ ID NO.1029 (top_21), SEQ ID NO.1030 (top_22), SEQ ID NO.1031 (top_23), SEQ ID NO.1032 (top_24), SEQ ID NO.1033 (top_25), SEQ ID NO.1034 (top_26), SEQ ID NO.1035 (top_27), SEQ ID NO.1036 (top_28), SEQ ID NO.1037 (top_29), SEQ ID NO.1038 (top_30), SEQ ID NO.1039 (top_31), SEQ ID NO.1040 (top_32), SEQ ID NO.1041 (top_33), SEQ ID NO.1042 (top_34), SEQ ID NO.1043 (top_35), SEQ ID NO.1044 (top_36), SEQ ID NO.1045 (top_37), SEQ ID NO.1046 (top_38), SEQ ID NO.1047 (top_39), SEQ ID NO.1048 (top_40), SEQ ID NO.1049 (top_41), SEQ ID NO.1050 (top_42), SEQ ID NO.1051 (top_43), SEQ ID NO.1052 (top_44), SEQ ID NO.1053 (bottom_01), SEQ ID NO.1054 (bottom_02), SEQ ID NO.1055 (bottom_03), SEQ ID NO.1056 (bottom_04), SEQ ID NO.1057 (bottom_05), SEQ ID NO.1058 (bottom_06), SEQ ID NO.1059 (bottom_07), SEQ ID NO.1060 (bottom_08), SEQ ID NO.1061 (bottom_09), SEQ ID NO.1062 (bottom_10, SEQ ID NO.1063 (bottom_11), SEQ ID NO.1064 (bottom_12), SEQ ID NO.1065 (bottom_13), SEQ ID NO.1066 (bottom_14), SEQ ID NO.1067 (bottom_15), SEQ ID NO.1068 (bottom_16), SEQ ID NO.1069 (bottom_17), SEQ ID NO.1070 (bottom_18), SEQ ID NO.1071 (bottom_19), SEQ ID NO.1072 (bottom_20), SEQ ID NO.1073 (bottom_21), SEQ ID NO.1074 (bottom_22), SEQ ID NO.1075 (bottom_23), SEQ ID NO.1076 (bottom_24), SEQ ID NO.1077 (bottom_25), SEQ ID NO.1078 (bottom_26), SEQ ID NO.1079 (bottom_27), SEQ ID NO.1080 (bottom_28), SEQ ID NO.1081 (bottom_29), SEQ ID NO.1082 (bottom_30), SEQ ID NO.1083 (bottom_31), SEQ ID NO.1084 (bottom_32), SEQ ID NO.1085 (bottom_33), SEQ ID NO.1086 (bottom_34), SEQ ID NO.1087 (bottom_35), SEQ ID NO.1088 (bottom_36), SEQ ID NO.1089 (bottom_37), SEQ ID NO.1090 (bottom_38), SEQ ID NO.1091 (bottom_39), SEQ ID NO.1092 (bottom_40), SEQ ID NO.1093 (bottom_41), SEQ ID NO.1094 (bottom_42), SEQ ID NO.1095 (bottom_43), SEQ ID NO.1096 (bottom_44), SEQ ID NO.1097 (bottom_45), SEQ ID NO.1098 (bottom_46), SEQ ID NO.1099 (connection_to_triangle_01), SEQ ID NO.1100 (connection_to_triangle_02), SEQ ID NO.1101 (connection_to_triangle_03), SEQ ID NO.1102 (connection_to_triangle_04), SEQ ID NO.1103 (connection_to_triangle_05), SEQ ID NO.1104 (connection_to_triangle_06), SEQ ID NO.1105 (connection_to_triangle_07), SEQ ID NO.1106 (connection_to_triangle_08), SEQ ID NO.1107 (connection_to_triangle_09), SEQ ID NO.1108 (connection_to_triangle_10), SEQ ID NO.1109 (connection_to_triangle_11), SEQ ID NO.1110 (connection_to_triangle_12), SEQ ID NO.1111 (for_biotin_anchor_01), SEQ ID NO.1112 (for_biotin_anchor_02), SEQ ID NO.1113 (for_biotin_anchor_03), SEQ ID NO.1114 (for_biotin_anchor_04), SEQ ID NO.1115 (for_biotin_anchor_05), SEQ ID NO.1116 (for_biotin_anchor_06), SEQ ID NO.1117 (for_biotin_anchor_07), SEQ ID NO.1118 (for_biotin_anchor_08), SEQ ID NO.1119 (for_biotin_anchor_09), SEQ ID NO.1120 (rotor_arm_dock_01), SEQ ID NO.1121 (rotor_arm_dock_02), SEQ ID NO.1122 (rotor_arm_dock_03), SEQ ID NO.1123 (rotor_arm_dock_04), SEQ ID NO.1124 (rotor_arm_dock_05), and SEQ ID NO.1125 (rotor_arm_dock_06);

or any combination thereof.

The term "DNA origami structure", as used herein, relates to a nanostructure that comprises DNA as a building material to make nanoscale shapes. Preparing a DNA origami involves folding of one or more "scaffolding" DNA strands into a particular shape using a plurality of rationally designed "staple" DNA strands, e.g. by self-assembly. A scaffolding strand is typically longer than a staple strand. The nucleic acid sequences of the staple strands are designed such that the staple strands hybridize to particular portions of the scaffolding strands and, due to the hybridization, a particular shape of the nanostructure is obtained. In one embodiment, the term nucleic acid "handle" relates to a nucleic acid sequence extension capable of binding to a moiety, e.g. a staple strand having extensions capable of binding to a moiety such as a nucleic acid sequence attached to a targeting agent. In a preferred embodiment, the nanomotor, the stator, and/or the rotor are DNA origami structure(s) and/or are comprised by DNA origami structure(s). In a preferred embodiment, the nanomotor comprises or consists of one or more DNA origami structure(s), for example a stator being a DNA origami structure and a rotor being a DNA origami structure, optionally a protrusion being a DNA origami structure. In a preferred embodiment, the nanomotor is a nucleic acid nanomotor, particularly a DNA origami structure.

The term "rotor", as used herein, relates to a moving component of a nanomotor, e.g. of the nanomotor of the invention. In one embodiment, the rotor is configured such that it is rotatably connected to the stator of the nanomotor. Preferably, the rotor and the stator are connected such that all relative movements of the rotor and the stator are constrained except of a rotation of the rotor within a plane substantially parallel to a first surface of the stator. In one embodiment, the rotor is configured such that it is rotatable around a rotation axis substantially perpendicular to said longitudinal axis of said rotor. In one embodiment, the rotor is electrically charged, for example negatively charged. In one embodiment, said rotor has a rod-like shape and/or a T-like shape. For example, the rotor may have a rod-like shape, wherein the rod comprises a stator docking site which is connected to the stator. In a preferred embodiment, the rotor is a nucleic acid rotor. The term "nucleic acid rotor" as used herein, refers to a rotor comprising or consisting of nucleic acid(s). In one embodiment, the rotor comprises or consists of a nucleic acid nanostructure, particularly a DNA origami structure. In one embodiment, the rotor comprises one or more sequences selected from SEQ ID NO. 466-892. In one embodiment, the rotor has a first domain and a second domain, e.g. a first arm and a second arm. In one embodiment, the first domain and the second domain of the rotor each extend along a longitudinal extension of said rotor, wherein the first domain extends along a first longitudinal extension and the second domain extends along a second longitudinal extension. In one embodiment, the first domain of the rotor, e.g. a first domain extending along a first longitudinal extension of said rotor, comprises one or more sequences selected from SEQ ID NO. 466-679. In one embodiment, the second domain of the rotor, e.g. a second domain extending along a first and/or second longitudinal extension of said rotor, comprises one or more sequences selected from SEQ ID NO. 680-892.

In one embodiment, when referring to a rotation of the rotor "within a plane substantially parallel" to a first surface of the stator, such expression is meant to be understood as referring to a scenario in which the rotor is within the plane substantially parallel to the first surface most of the time and/or most of the degrees of such rotation; however, such expression also comprises scenarios in which the rotor is out of such plane for a minority of the time and/or a minority of the degrees of such rotation, e.g. when interacting and/or circumventing a protrusion that hinders the rotor remaining in said plane. For example, a rotation "within a plane" means that the rotation occurs within said plane for at least about 50% of the rotation, preferably at least about 60%, more preferably at least about 70% of the time of such rotation. For example, a rotation "within a plane" means that the rotation occurs within said plane for at least a total of about 180° of a 360° rotation, preferably at least a total of about 220° of a 360° rotation, more preferably at least a total of about 250° of a 360° rotation. In one embodiment, such "total" of degrees, e.g. a total of about 180° degrees, relates to a sum of the degrees during a rotation and may be interrupted by intermediate out-of-plane rotations.

The term "stator", as used herein, relates to the stationary part of a nanomotor, preferably a nanomotor of the invention. The stator may be a substrate e.g. immobilized substrate, such as a glass substrate, and/or a nanostructure such as a nucleic acid nanostructure. In a preferred embodiment, the stator is a nucleic acid nanostructure such as an immobilized nucleic acid nanostructure. In one embodiment, said stator comprises at least one protrusion extending towards said rotor, preferably extending towards said rotor such that said rotor interacts with said protrusion at least once when rotating by 360° with respect to said rotation axis. In one embodiment, the stator is configured such that an energy landscape with at least one energy minimum is provided, e.g. by providing the stator with a protrusion and/or a suitable roughness of a first surface of the stator. The energy landscape having at least one energy minimum advantageously facilitates the directionality of the rotation of the rotor. In one embodiment, the stator comprises or consists of a nucleic acid nanostructure, particularly a DNA origami structure. In one embodiment, the stator comprises one or more sequences selected from SEQ ID NO. 1-465 and 893-1125. In one embodiment, a first domain of a stator comprises one or more sequences selected from SEQ ID NO. 1-224. In one embodiment, a second domain of a stator comprises one or more sequences selected from SEQ ID NO. 225-465. In one embodiment, a stator is provided with a torsional spring, wherein, preferably, said stator with torsional spring comprises one or more sequences selected from SEQ ID NO. 893-1125.

In one embodiment, said stator comprises a first domain and a second domain. In one embodiment, the first domain and the second domain comprise or consist of nucleic acid nanostructures, particularly DNA origami structures. In one embodiment, the first domain and second domain are directly connected e.g. covalently coupled, coupled via a linker, mechanically interlocked, and/or connected via a nucleic acid hinge. For example, a first domain and a second domain, such as a first domain in the form of a pedestal and a second domain in the form of a triangle, may be connected using a sequence of any of SEQ ID NO. 198-209, 662-679, 887-892, and 1099-1110. In one embodiment, said stator comprises a first domain and a second domain, wherein said first domain comprises said rotor docking site; wherein, preferably, said second domain comprises at least one protrusion extending towards said rotor such that said rotor contacts said protrusion at least once when rotating by 360° with respect to said rotation axis. In one embodiment, the second domain has a triangular shape, a rod-like shape, a star-like shape, and/or elliptic shape, preferably a triangular shape. In one embodiment, the stator comprises a first domain and a second domain, wherein the second domain comprises at least one protrusion. The term "nucleic acid stator" as used herein, refers to a stator, preferably a stator as defined herein, comprising or consisting of nucleic acid(s). In a preferred embodiment, the stator is a nucleic acid stator. In one embodiment, the first domain has a size of about 10-60 nm x 10-80 nm, e.g. about 30 nm x about 40 nm. In one embodiment, the second domain has a size of about 5-30 nm x 10-80 nm, e.g. about 13 nm x 60 nm. In one embodiment, the stator is immobilized, e.g. at a glass surface. In one embodiment, the stator is immobilized by any of biotin, streptatvidin, and neutravidin at a surface e.g. at a glass surface.

In one embodiment, the term "protrusion", as used herein, relates to a nanostructure or domain, e.g. a nucleic acid nanostructure, comprised by a stator, e.g. a stator of the nanomotor of the invention. In one embodiment, such protrusion extends from said stator towards said rotor, for example extends from a first surface of said stator towards said rotor. In a preferred embodiment, said protrusion extends from said stator towards said rotor such that said rotor interacts with said protrusion at least once when rotating by 360° with respect to said rotation axis, e.g. said rotor interacting with said protrusion by said rotor contacting said protrusion, e.g. physically contacting said protrusion, said rotor interacting with said protrusion by electrostatic repulsion or attraction, said rotor circumventing said protrusion with an out-of-plane motion, and a combination thereof. Such interaction may result in the rotor briefly exiting and reentering the plane substantially parallel to a first surface of the stator in which the rotor mostly rotates. In one embodiment, the at least one protrusion extends to the plane substantially parallel to a first surface of the stator in which the rotor mostly rotates. In one embodiment, the at least one protrusion extends to a plane in which the longitudinal extension of the rotor extends. In one embodiment, the at least one protrusion extends to a plane in which the longitudinal axis of the rotor extends. In one embodiment, said protrusion is an obstacle for said rotor and/or for a rotation of said rotor. In one embodiment, said protrusion is an obstacle interacting with said rotor at least once when the rotor undergoes a 360° rotation.

In one embodiment, said stator, e.g. a second domain of the stator, comprises at least one protrusion extending towards said rotor such that said rotor interacts with said protrusion at least once when rotating by 360° with respect to said rotation axis. In one embodiment, such interaction of said protrusion and said rotor comprises any of said rotor contacting said protrusion, e.g. physically contacting said protrusion, said rotor interacting with said protrusion by electrostatic repulsion or attraction, said rotor circumventing said protrusion with an out-of-plane motion, and a combination thereof. In one embodiment, the terms "interacting" and "contacting" are used interchangeably. In one embodiment, the at least one protrusion is configured such that it modifies the energy landscape in which said rotor rotates such that the energy landscape comprises at least one minimum. Providing the stator with the at least one protrusion has the advantage of facilitating a directional rotation.

The term "first surface", as used herein, relates to a surface of a stator. In one embodiment, the first surface can be in the form of an area, line, edge, corner, DNA helix blunt-end, DNA and/or a point, preferably in the form of an area, such as an area substantially parallel to a longitudinal extension of the rotor. In one embodiment, a surface has any topology. In one embodiment, the first surface is a rough surface. In one embodiment, a rough surface is a surface providing at least one energy minimum for said rotor, thereby allowing a directional rotation of said rotor. In one embodiment, a surface is a two-dimensional or three-dimensional surface. In one embodiment, a first surface is an area, e.g. a substantially flat area, which comprises at least one protrusion. In one embodiment, the first surface of the stator is a substantially flat area, optionally comprising a protrusion. In one embodiment, the expressions a "stator comprises" and "stator comprises a protrusion", in the context of a stator comprising a protrusion, means that said stator, e.g. said first surface of said stator, presents at least a portion of said protrusion and/or that at least a portion of said protrusion is accessible from said stator e.g. from said first surface of said stator. In one embodiment, the term "accessible", as used herein, means capable of interacting with said rotor. In one embodiment, the first surface of the stator is a surface of said stator facing the rotor, preferably facing a longitudinal extension of said rotor.

In one embodiment, the first surface of the stator is an area of said stator facing the rotor, preferably facing a longitudinal extension of said rotor.

The term "rotor docking site", as used herein, relates to a site of said stator which is configured such that the rotor can be connected therewith, e.g. by nucleic acid base pairing, by connection via a linker e.g. a polymeric or nucleic acid linker, and/or by mechanical interlocking. In one embodiment, the rotor docking site of said stator is configured to be connected to said stator docking site of said rotor. For example, the rotor docking site may comprise or consist of a sequence of single-stranded nucleic acids which may be connected to the stator docking site which comprises or consists of the complementary sequence of single-stranded nucleic acids by nucleic acid base pairing. For example, a rotor docking site and a stator docking site may be connected using a sequence of any of SEQ ID NO. 198-209, 662-679, 887-892, and 1099-1110. In one embodiment, a rotor docking site and/or a stator docking site comprise(s) or consist(s) of a sequence of any of SEQ ID NO. 198-209,219-224,662-679,887-892,1099-1110, and 1120-1125.

The term "stator docking site", as used herein, relates to a site of said rotor which is configured such that the stator can be connected therewith, e.g. by nucleic acid base pairing, by connection via a linker e.g. a polymeric or nucleic acid linker, and/or by mechanical interlocking. In one embodiment, the stator docking site of said rotor is configured to be connected to said rotor docking site of said stator. In one embodiment, said rotor docking site and said stator docking site are directly connected e.g. by nucleic acid base pairing within a nucleic acid hinge or nucleic acid torsional spring, or are indirectly connected by a linker, e.g. polymeric linker, or by mechanical interlocking the rotor and the stator. The nanomotor can be used as an energy storing device by configuring the nanomotor with a torsional spring connecting the rotor docking site and the stator docking site, thereby allowing energy to be stored by the torsional spring. In one embodiment, the nucleic acid hinge and/or the nucleic acid torsional spring comprise(s) a nucleic acid sequence of about 1 to 200 nucleotides, preferably about 1 to 100 nucleotides. For example, a nucleic acid hinge may comprise or consist of three nucleotides such as a CAT-sequence. For example, the torsional spring may comprise or consist of a sequence comprising 50 to 90 nucleotides, e.g. about 75 nucleotides. The rotor and the stator may also be connected by mechanically interlocking the rotor and the stator. In one embodiment, the stator docking site comprises or consists of a recess present in said rotor, wherein said recess can be connected to a rotor docking site of said stator by mechanically interlocking the rotor docking site and the stator docking site, by nucleic acid base pairing, and/or by covalent coupling. In one embodiment, the rotor docking site comprises or consists of a docking protrusion present at said stator, wherein said docking protrusion can be connected to a stator docking site of said rotor by mechanically interlocking the rotor docking site and the stator docking site, by nucleic acid base pairing, and/or by covalent coupling.

In one embodiment, the term "longitudinal extension", as used herein, relates to a longitudinal extension of the rotor. The rotor has at least one longitudinal extension extending along a longitudinal axis, preferably extending from said stator docking site. For example, the rotor may extend from said stator docking site in one direction or in two opposing directions along the longitudinal axis. The stator docking site may be any site at the rotor that is part of a connection to the stator, particularly the rotor docking site of the stator. For example, the stator docking site may be a nucleic acid of the rotor that is connected to a linker or to a nucleic acid of a rotor docking site of said stator, and the rotor docking site may be a nucleic acid of the stator that is connected to a linker or to a nucleic acid of a stator docking site of said rotor. In one embodiment, at least one longitudinal extension of said rotor is at least 1 nm, preferably at least 10 nm, more preferably at least 30 nm. In one embodiment, the rotor comprises at least two longitudinal extensions extending from said stator docking site, wherein at least one, preferably at least two of said at least two longitudinal extensions has a length of at least 1 nm, preferably at least 10 nm, more preferably at least 30 nm. In one embodiment, the rotor comprises at least two longitudinal extensions extending from said stator docking site along at least one longitudinal axis.

In one embodiment, said longitudinal extension of said rotor, if present each of said two longitudinal extensions of said rotor, has a length of at least 1 nm, preferably at least 10 nm, more preferably at least 30 nm. In one embodiment, the rotor has at least two longitudinal extensions, extending from said stator docking site along at least one longitudinal axis, and each of said longitudinal extensions has a length of at least 1 nm, preferably at least 10 nm, more preferably at least 30 nm. In one embodiment, a total length of said longitudinal extension of said rotor, if present of said two longitudinal extensions of said rotor, is in the range of from 20 nm to 1000 nm, preferably 30 nm to 700 nm, even more preferably 50 nm to 600 nm. In one embodiment, in a case in which at least two longitudinal extensions extend from said stator docking site along a longitudinal axis e.g. in a case in which the rotor has a T-shape, a total length of each of said two longitudinal extensions or a total length of the two longitudinal extensions, preferably a total length of the two longitudinal extensions, is in the range of from 20 nm to 1000 nm, preferably 30 nm to 700 nm, even more preferably 50 nm to 600 nm. In one embodiment, a first longitudinal extension of said at least two longitudinal extensions has a length of at least 1 nm, preferably at least 10 nm, more preferably at least 30 nm, and a second longitudinal extension of said at least two longitudinal extensions has a length of at least 1 nm, preferably at least 10 nm, more preferably at least 30 nm. In one embodiment, such at least two longitudinal extensions extend, preferably from said stator docking site, along the same longitudinal axis or along different longitudinal axes. In one embodiment, a first longitudinal extension of said at least two longitudinal extensions has a length of at least 1 nm, preferably at least 10 nm, more preferably at least 30 nm, and a second longitudinal extension of said at least two longitudinal extensions has a length of at least 10 nm, preferably at least 30 nm, e.g. a first longitudinal extension has a length of about 50 nm and the second longitudinal extension has a length of about 500 nm. For example, a first longitudinal extension may have a length of about 50 nm and the second longitudinal extension may have a length of about 500 nm, thereby the rotor having a total length of its longitudinal extension of about 550 nm. In one embodiment, a first longitudinal extension and a second longitudinal extension of said at least two longitudinal extensions have the same length or a different length. For example, a first longitudinal extension may have a length of about 10 nm and a second longitudinal extension may have a length of about 20 nm, thereby providing a total length of about 30 nm.

In one embodiment, the term "longitudinal axis", as used herein, relates to a line passing through a longitudinal extension, preferably a maximum longitudinal extension, and/or a line passing through a length of the rotor, preferably a maximum length of the rotor. In one embodiment, a first surface of said stator is in a plane substantially parallel to a longitudinal axis of the rotor.

In one embodiment, the term "substantially parallel orientation", as used herein, relates to an orientation of a longitudinal axis of said rotor which is substantially parallel to a first surface of the stator, wherein said first surface is a surface facing the rotor, preferably facing a longitudinal extension of said rotor. For example, the longitudinal axis may be substantially parallel to a first surface of said stator which is an area facing the rotor, which optionally comprises one or more protrusions. In one embodiment, the term "substantially perpendicular to said longitudinal axis", as used herein, relates to the orientation of a rotation axis of said rotor with respect to a longitudinal axis of said rotor. In one embodiment, the rotation axis of said rotor runs through the stator docking site and/or the rotor docking site. In one embodiment, the rotation axis is substantially perpendicular to an axis running through the maximum longitudinal extension of the rotor. In one embodiment, the rotation axis runs through the stator docking site, optionally further runs through the rotor docking site, and is substantially perpendicular to an axis running through the maximum longitudinal extension of the rotor, particularly substantially perpendicular to the longitudinal axis.

In one embodiment, the system comprising a nanomotor and a control unit configured to generate an alternating current, as defined herein, is a device or assembly comprising said nanomotor and said control unit configured to generate an alternating current. In one embodiment, the system of the present invention is a device or assembly comprising

- a nanomotor comprising a rotor and a stator, wherein said stator comprises a first surface and a rotor docking site, wherein said rotor comprises a stator docking site configured to be connected to said rotor docking site of said stator,

  wherein said rotor has a longitudinal extension extending from said stator docking site along a longitudinal axis,
  wherein said longitudinal axis has a substantially parallel orientation to said first surface of said stator,
  wherein said rotor is rotatable around a rotation axis substantially perpendicular to said longitudinal axis,
  wherein said rotor is electrically charged;
  wherein, optionally, said nanomotor is a nanomotor as defined herein; and

- a control unit configured to generate an alternating current for rotating said nanomotor, wherein said control unit preferably comprises at least two electrodes;

wherein said stator of said nanomotor has a fixed orientation with respect to said control unit.

In one embodiment, said stator of said device comprises at least one protrusion extending towards said rotor, preferably extending towards said rotor such that said rotor interacts with said protrusion at least once when rotating by 360° with respect to said rotation axis. In one embodiment, said stator comprises said at least one protrusion, and said at least one protrusion is configured such that it provides an energy minimum located at about 30° to 60°, preferably about 45°, relative to the field axis of the alternating current.

In one embodiment, the system is configured such that said rotor is rotatable within an energy landscape defined by a plot of a free energy over a rotor angle θ, wherein said rotor angle θ is a rotor angle of said longitudinal axis of said rotor with respect to an axis perpendicular to said rotation axis, wherein said energy landscape has at least one energy minimum. In one embodiment, said rotor angle is a rotor angle of said longitudinal axis of said rotor with respect to the direction of the alternating current generated by the control unit. In one embodiment, said rotor angle is a rotor angle of said longitudinal axis of said rotor with respect to an axis of a field of the alternating current generated by the control unit. In one embodiment, a protrusion is configured such that at least a part of said protrusion extends parallely to said rotation axis. In one embodiment, the system is configured such that an energy landscape is provided for the rotor which comprises at least one energy minimum, e.g. by providing the nanomotor, preferably the stator, with a protrusion; by providing the stator and/or the rotor with a rough surface; and/or by providing the nanomotor such that there is a rotation imbalance in the rotation of the rotor.

In one embodiment, said system is configured such that said stator comprises at least one protrusion, wherein said protrusion is located at said stator such that an angle between the field axis of the alternating current and an axis connecting said protrusion and said rotor docking site of about 30° to 60°, preferably about 45°, is provided. In one embodiment, said system is configured such that said stator comprises at least one protrusion, wherein said protrusion is located at said stator such that an energy minimum at about 30° to 60°, preferably about 45°, relative to the field axis of the alternating current is provided.

In one embodiment, the control unit is configured to generate an alternating current having a frequency in the range of from 0.1 to 1000 Hz, preferably in the range of from 0.5 Hz to 100 Hz, even more preferably in the range of from 1 Hz to 10 Hz, e.g. about 5 Hz. In one embodiment, the control unit is configured to generate an alternating current having a voltage in the range of from 1V to 200 V, preferably 5 V to 100 V, more preferably 20 V to 60 V.

In one embodiment, the method of rotating comprises providing a nanomotor as defined herein. In one embodiment, the nanomotor is a nucleic acid nanostructure comprising a nucleic acid stator and/or a nucleic acid rotor. In one embodiment, in the context of a method of the invention, the term "providing a nanomotor" or "providing a nucleic acid nanostructure" comprises providing an assembled nucleic acid nanostructure and/or providing a building material for a nucleic acid nanostructure, such as a scaffolding strand and one or more staple strands. For example, the nanomotor, the rotor, and/or the stator may be such nucleic acid nanostructure. In one embodiment, preparing a nanostructure comprises a step of allowing self-assembly of a nanostructure and purifying said self-assembled nanostructure. In one embodiment, allowing self-assembly comprises mixing at least one scaffolding strand and one or more staple strands, optionally further comprises adjusting the ionic strength, e.g. by adding $MgCl_2$ to 20 mM, and/or further comprises using a temperature protocol running a sequence of temperatures. In one embodiment, said purifying comprises removing the remaining excess of staple strands, e.g. by a precipitation such as PEG-precipitation, filtration, and/or liquid chromatography. In one embodiment, self-assembly and/or a step of allowing self-assembly comprises a step of denaturation and a step of cooling. In one embodiment, a step of denaturation is performed at a temperature of from 50°C to 80°C, preferably 60°C to 70°C, e.g. about 65°C, for a period of from 1 minute to 45 minutes, preferably 10 to 20 minutes, e.g. about 15 minutes. In one embodiment, a step of cooling is performed at a temperature of from 0°C to 70°C, preferably 20°C to 60°C, e.g., about 50°C to 58°C. In a preferred embodiment, a step of cooling is performed as a gradual cooling, preferably at a temperature from about 58°C to about 50°C with a decrease of 1°C per hour. A person skilled in the art understands that the protocol for self-assembly depends on the design and/or nucleic acid sequence of the nanostructure, and that the protocol can be adjusted in line with known protocols for preparing nanostructures. In one embodiment, a nanostructure is configured to have a scaffolding sequence that does not comprise a sequence forming secondary structures. In one embodiment, a self-assembled nanostructure has one or more vacancies, e.g. single-stranded nucleic acid sequences that can form the rotor docking site or the stator docking site. In one embodiment, the nanomotor, the stator, and/or the rotor are a nucleic acid nanostructure. In one embodiment, the nanomotor comprises a nucleic acid nanostructure which is the stator and/or a nucleic acid nanostructure which is the rotor, which are optionally directly connected, e.g. connected via a nucleic acid hinge or a nucleic acid torsional spring, or are linked via a linker or a mechanical interlocking. In one embodiment, a nucleic acid stator and a nucleic acid rotor are connected by covalent bonding, by nucleic acid base pairing, by a nucleic acid hinge, and/or by a nucleic acid torsional spring to form a nucleic acid nanomotor. In one embodiment, the nanomotor comprised by a system of the invention is a nucleic acid nanomotor, as defined above. In one embodiment, the nanomotor provided in a method of rotating of the invention is a nucleic acid nanomotor, as defined above.

The method of rotating of the invention is highly advantageous in that a directionality of the rotation can be achieved, e.g., by providing the stator with said protrusion, by applying an alternating current at a frequency in the range of from 0.1 to 1000 Hz, preferably in the range of from 0.5 Hz to 100 Hz, even more preferably in the range of from 1 Hz to 10 Hz, and/or by applying an alternating current having a voltage in the range of from 1V to 200 V, preferably 5 V to 100 V, more preferably 20 V to 60 V.

The frequency and voltage of the alternating current can be adjusted by the skilled person. For example, the shorter the total length of said longitudinal extension of said rotor, the higher are the frequencies of said alternating current to be used. In one embodiment, the frequency of the applied alternating current relates to 1/tau, wherein tau is the duration of a 180° rotation of a rotor having a constant of friction gamma.

In one embodiment, the use of a nanomotor, as defined above, or of a system, as defined above, as a turbine, propulsion, fluid mixer, energy storing device, machine applying mechanical force e.g. on a system coupled to said nanomotor, and/or in chemical synthesis, comprises rotating the rotor of said nanomotor. In one embodiment, when the nanomotor or system is used as a machine applying mechanical force, the nanomotor or system is used for pulling on molecular tethers.

The terms "of the [present] invention", "in accordance with the invention", "according to the invention" and the like, as used herein are intended to refer to all aspects and embodiments of the invention described and/or claimed herein.

As used herein, the term "comprising" is to be construed as encompassing both "including" and "consisting of", both meanings being specifically intended, and hence individually disclosed embodiments in accordance with the present invention. Where used herein, "and/or" is to be taken as specific disclosure of each of the two specified features or components with or without the other. For example, "A and/or B" is to be taken as specific disclosure of each of (i) A, (ii) B and (iii) A and B, just as if each is set out individually herein. In the context of the present invention, the terms "about" and "approximately" denote an interval of accuracy that the person skilled in the art will understand to still ensure the technical effect of the feature in question. The term typically indicates deviation from the indicated numerical value by $\pm 20\%$, $\pm 15\%$, $\pm 10\%$, and for example $\pm 5\%$. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. Where an indefinite or definite article is used when referring to a singular noun, e.g. "a", "an" or "the", this includes a plural of that noun unless something else is specifically stated.

BRIEF DESCRIPTION OF THE FIGURES

The present invention is now further described by reference to the following figures.

All methods mentioned in the figure descriptions below were carried out as described in detail in the examples.

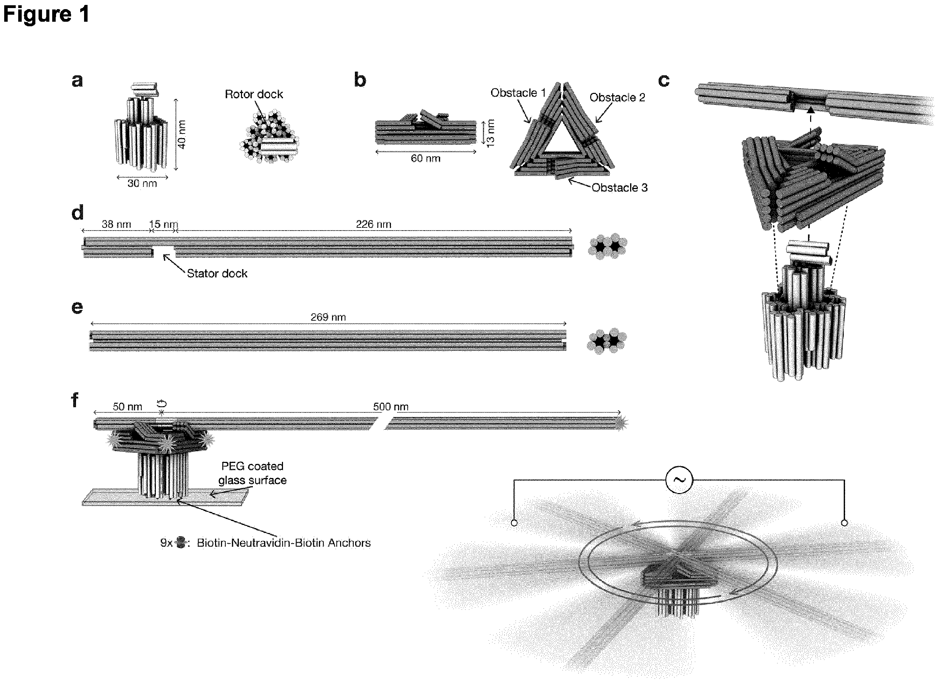

**Figure 1** shows the motor design and experimental setup. **(a, b)** Schematics of a pedestal and triangular platform, respectively. Cylinders indicate DNA double-helices. **(c)** Schematic illustration of motor assembly steps. **(d, e)** Rotor arm components. **(f)** Left: Schematic illustration of the experimental setup for observing motor dynamics in an inverted TIRF microscope. The pedestal is fixed via multiple biotin-neutravidin linkages to a microscope cover slip. Star at the rotor arm tip: $Cy_5$ dyes. Stars at the triangle vertices: Labelling positions for DNA PAINT imager strands. Right: Two platinum electrodes are stuck into the liquid chamber from above and connected to a function generator generating a square-wave alternating current to create a fixed-axis energetic modulation that acts on all motors.

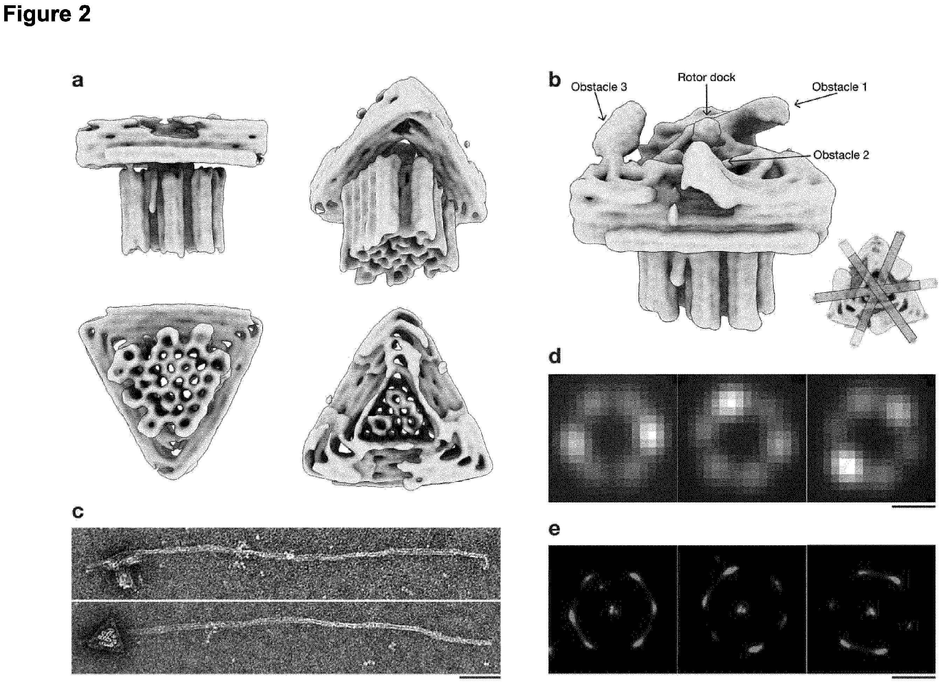

**Figure 2** shows the structural analysis of the DNA origami motor. **(a)** Different views of a 3D electron density map of the motor block determined via single particle cryo EM. **(b)** Motor block cryo EM map detail depicted at different density threshold at which the three obstacles and the rotor dock can be discerned. Inset: schematics that shows six preferred dwelling sites of the rotor arm. **(c)** Exemplary negative staining TEM images of a motor variant with long rotor arm attached. Scale bar = 50 nm. **(d)** Exemplary single particle fluorescence images. Scale bar = 500 nm. The images show the standard deviation of the mean intensity per pixel computed over all the frames from recorded TIRF movies. **(e)** DNA PAINT images showing rotor arm tip positions relative to the triangle platform. Scale bar = 500 nm.

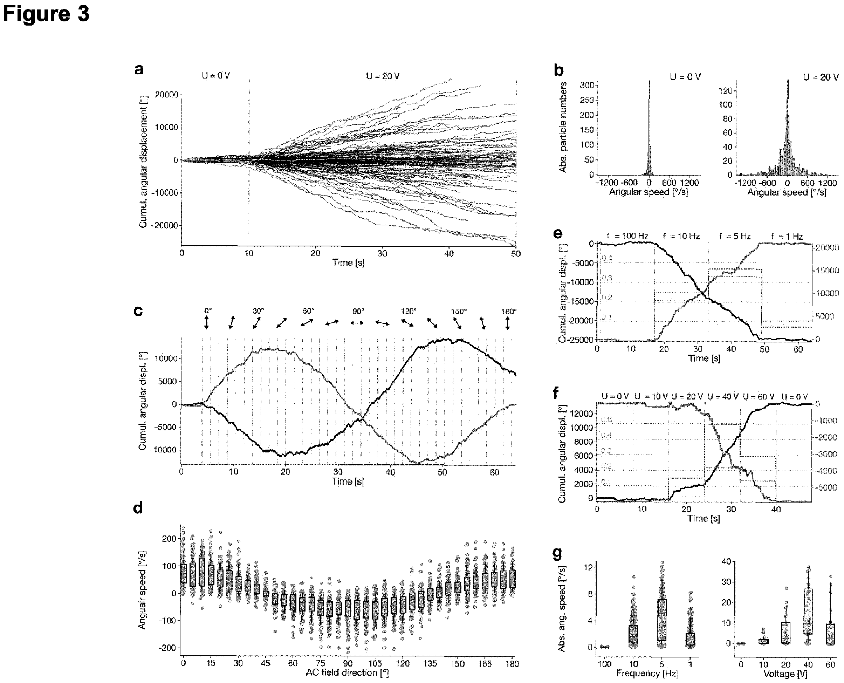

**Figure 3** shows the motor dynamics. **(a)** Exemplary single-particle traces showing cumulative angular displacement of rotor arm tips, with the AC field off during the first 10 seconds. Blue, orange: exemplary motors rotating CW and CCW, respectively. The AC field was a 5 Hz square wave with 20V amplitude, unless otherwise specified, **(b)** Histograms of the angular speed of single particles with field off (left, N = 557) versus field on (right, N = 1078). **(c)** Exemplary single motor traces showing influence of AC field axis orientation on motor speed. AC field axis was rotated stepwise in 5° increments. Dashed lines indicate timepoints when the field direction was updated. **(d)** Scatter plot of phase-corrected angular speeds for different AC field axes (N = 75). The box plots show the 25th and 75th percentile with the whiskers indicating the 10th and 90th percentile. The lines within the boxes mark the median. **(e)** Solid lines: Exemplary single particle traces seen during an AC frequency sweep, showing a CCW and a CW rotating motor. Dotted lines give the effective angular speed given as turns/field cycles. **(f)** Solid lines: Exemplary single particle traces seen during a voltage sweep, showing a CCW and a CW rotating motor. Dotted lines give the directional bias efficiency as in (e). **(g)** Scatter plot of absolute angular speeds per AC field cycle for different frequencies (left, N = 156) and different voltages (right, N = 28). Box and whisker plots as in (d).

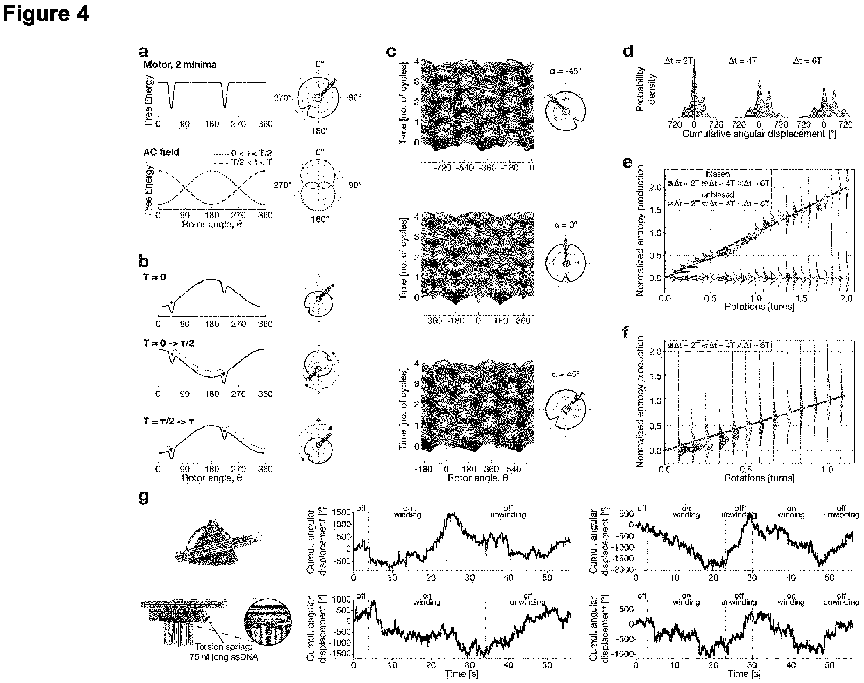

**Figure 4** shows the motor mechanism, fluctuation analysis, and winding up a spindle. **(a)** Solid line: Schematic internal energy landscape for a simplified model motor featuring two minima. Dashed, dotted lines: the energetic contribution of an external AC field applied along the 0°-180° axis. The insets on the right give the energy functions in polar coordinates. **(b)** Solid lines: snapshots of the effective energy landscape (i.e., sum of internal motor energy plus field contribution). Dashed lines give expected trajectory of the rotor arm upon field direction inversion. Initial position per field half cycle is indicated by a dot. **(c)** Effective energy landscapes for the hypothetical 2-minima motor from (a, b) plotted as 2D space-time surfaces, and computed for three exemplary orientations of motor relative to field axis (see insets). Field axis is along the 0°-180° direction. Dots: exemplary single-particle trajectories as simulated by Langevin dynamics. **(d)** Distribution of cumulative angular displacements after two, four, and six AC field cycles aggregated from a simulated Langevin dynamics trajectory. The prominent peaks at 180° intervals are due to the two-fold symmetry in the simulated energy landscape. **(e)** Irreversibility analysis for simulated motors. Shown is an ensemble average over 20 simulated motors evaluated at different displacement values and for time intervals of two, four, and six AC cycles as indicated in grey shades. The motors contain a two-fold symmetry as illustrated in panel (a) where in the inclining scheme motor orientations with 45° relative to the field were used and in the horizontal scheme symmetric orientations (0°) were used. Solid lines were added as a guide to the eye to emphasize the trend or the lack thereof. **(f)** Irreversibility analysis of experimentally observed motor particles. Shading of the distribution indicates the time interval as in panel (e). To account for variations in rotation speed the linear trend in each rotor was renormalized to a slope of unity prior to computing the distributions shown. A line with unit slope was added to guide the eye. **(g)** Left: Schematics of a motor variant that includes a torsional spring at the pivot point, as realized by a ssDNA loop. Right: Exemplary experimentally observed single-particle traces showing cumulative angular displacement of motors. First phase: AC field off, spring relaxed. Second phase: AC field on, spring is wound up. Third phase: AC field off, spring is unwinding and driving the motion.

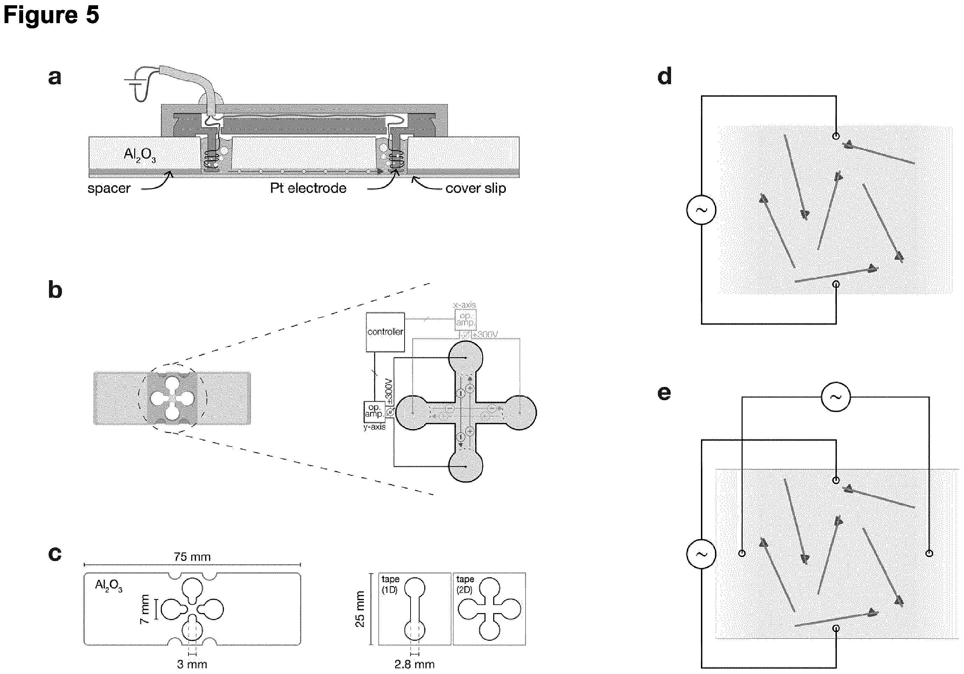

**Figure 5** shows the experimental setup featuring electrodes for the application of AC fields. **(a)** Scheme of the cross section of the sample chamber with inserted plug. **(b)** Illustration of assembled sample chamber in top view and schematic of the resulting channel shape and electrode wiring (main electrode pair in black, second optional pair in grey). **(c)** Dimensions of top component of sample chamber (left) and adhesive tape for one (middle) and two (right) electrode pairs in use. **(d)** Schematic top view of rotors attached to the microscope cover slip with one electrode pair for a uniaxial AC field. **(e)** Schematic top view of rotors attached to the microscope cover slip with two electrode pairs for the possibility of rotating the AC field axis.

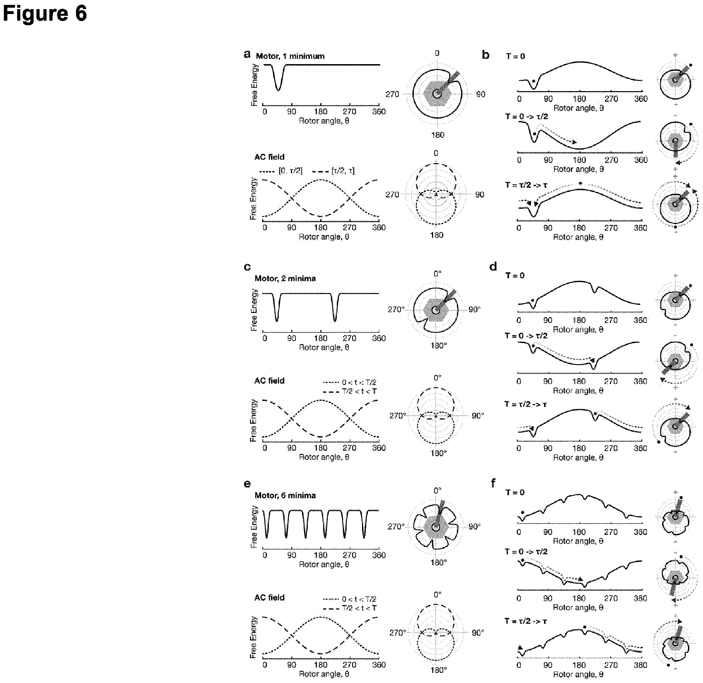

**Figure 6** shows the motor mechanism. **(a, c, e)** Solid line: Schematic internal energy landscape for a simplified model motor featuring one (a), two (c) and six (e) minima. Dashed, dotted lines: the energetic contribution of an external AC field applied along the 0°-180° axis. The insets on the right give the energy functions in polar coordinates. **(b, d, f)** Solid lines: snapshots of the effective energy landscape (i.e., sum of internal motor energy plus field contribution) for a motor with one (b), two (d) and six (f) minima. Dashed lines give expected trajectory of the rotor arm upon field direction inversion. Initial position per field half cycle is indicated by a dot.

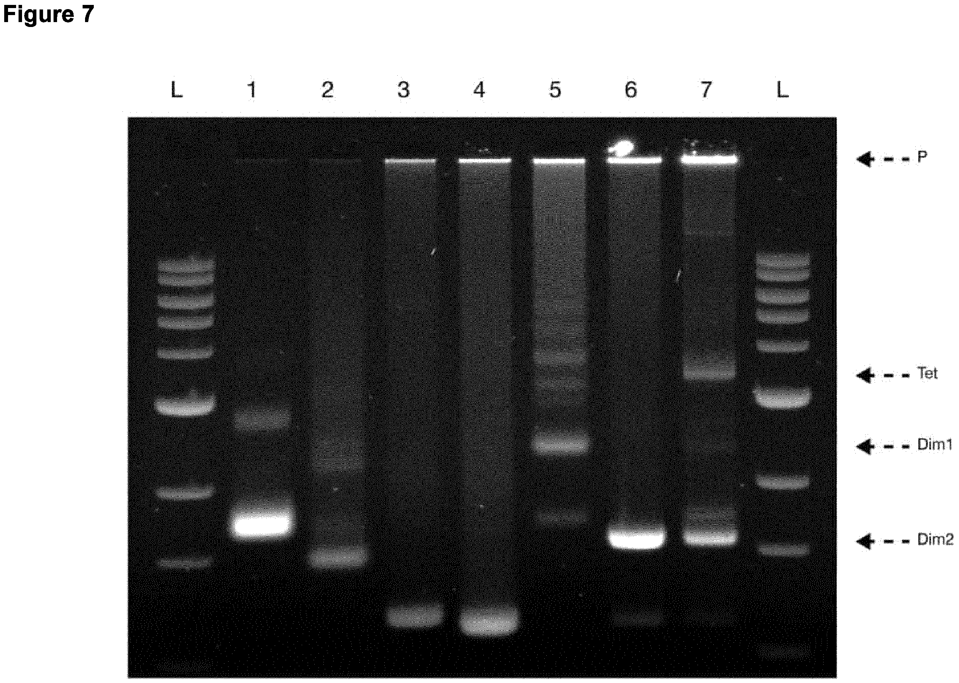

**Figure 7** shows the gel-electrophoretic analysis of the motor assembly. Laser-scanned image of a 1.5% agarose gel with 5.5 mM $MgCl_2$ run on a water bath at 100 V for 165 min on which the following samples were electrophoresed: L, 1kb ladder; 1, triangular platform; 2, pedestal; 3, rotor arm first part; 4, rotor arm second part (extension); 5, triangular platform and pedestal dimer; 6: rotor arm dimer; 7 fully assembled tetramer. P: pockets, Tet: tetramer, Dimi: dimer of triangular platform and pedestal, Dim2: dimer of rotor arm.

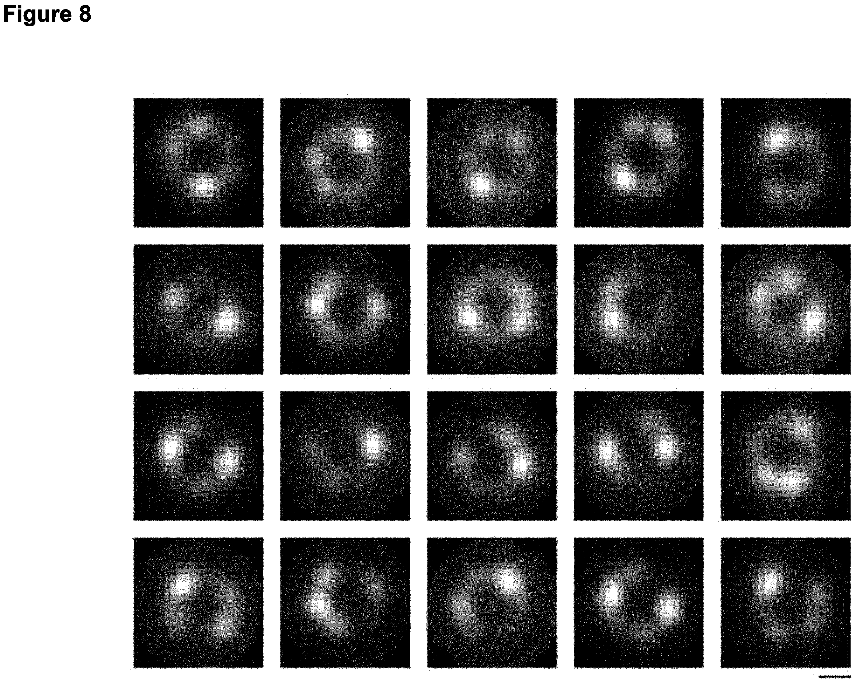

**Figure 8** shows exemplary single images of standard deviation of fluorescence intensity from single particle TIRF movies. Scale bar = 500 nm. The images show the standard deviation of the mean intensity per pixel computed over all the frames from recorded TIRF movies.

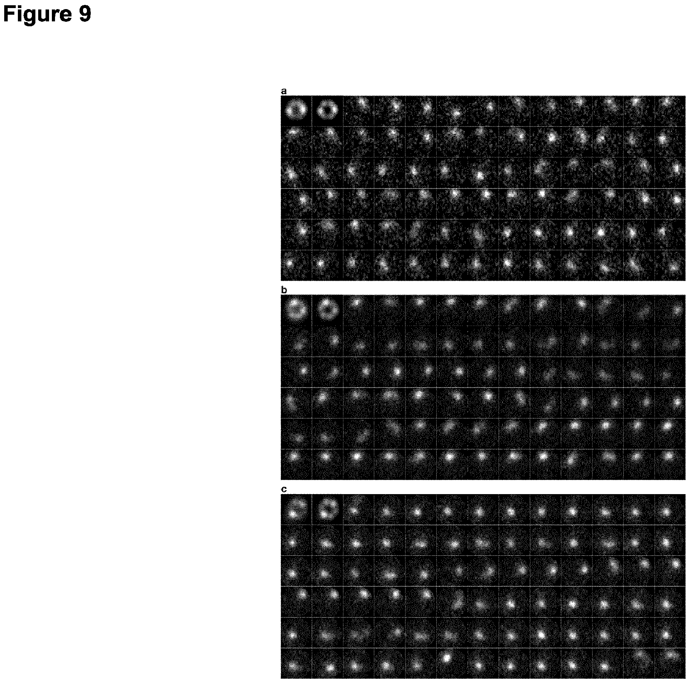

**Figure 9** shows single-frame TIRF images. **(a-c)** Montage of first 76 individual frame images from the particles given in Fig. **2** ((a) left, (b) middle (c) right particle). First square: average intensity of the entire movie. Second square: standard deviation of the mean intensity per pixel computed from entire movie.

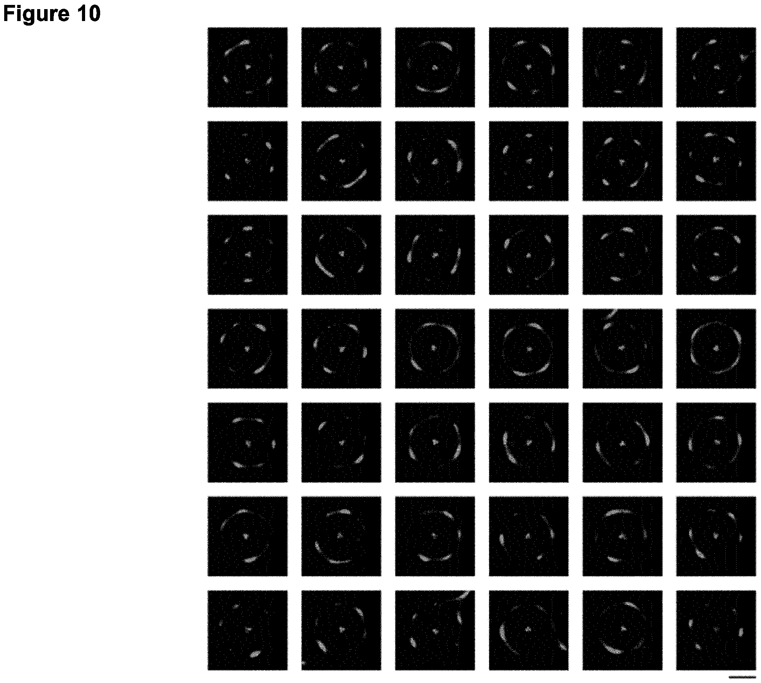

**Figure 10** shows exemplary DNA PAINT images showing rotor arm tip positions (outer traces) relative to the triangular platform (inner traces). Scale bar = 500 nm.

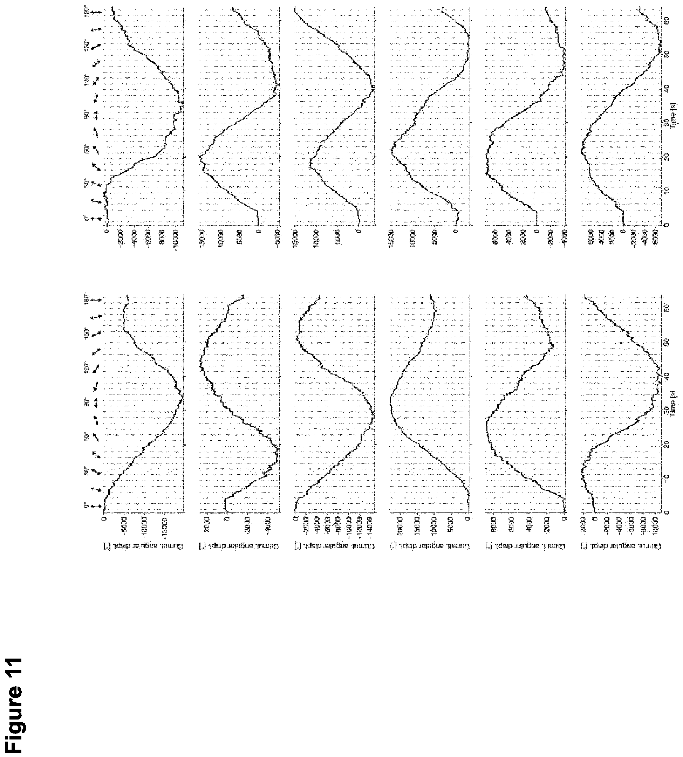

**Figure 11** shows exemplary single particle traces showing influence of the AC field axis orientation on motor rotation. AC field axis was rotated stepwise in 5° increments every 1.6 seconds. Dashed lines indicate timepoints when the field direction was updated.

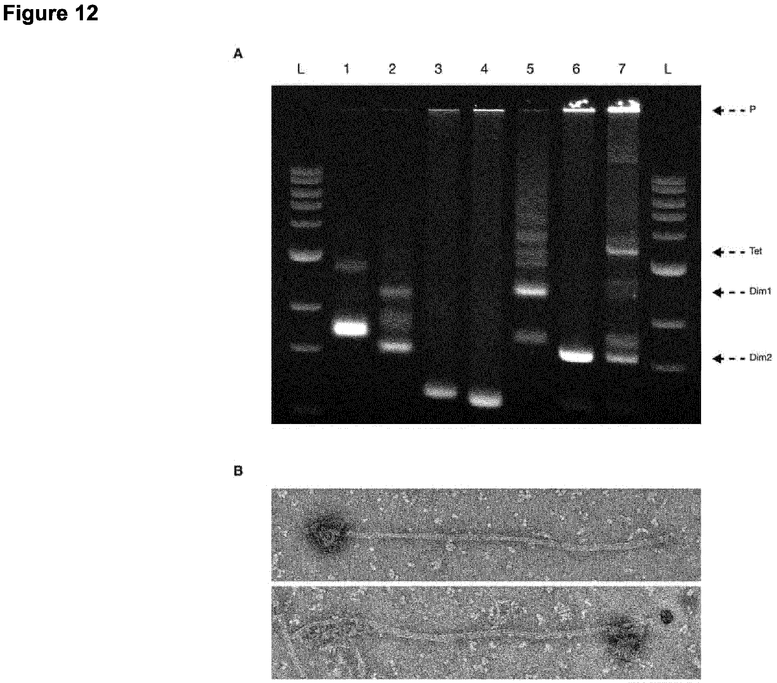

**Figure 12** shows the assembly of the rotary apparatus with torsional spring. (a) Laser-scanned image of a 1.5% agarose gel with 5.5 mM $MgCl_2$ run on a water bath at 100 V for 165 min on which the following samples were electrophoresed: L, 1kb ladder; 1, triangular platform; 2, pedestal; 3, rotor arm first part; 4, rotor arm second part (extension); 5, triangular platform and pedestal dimer; 6: rotor arm dimer; 7 fully assembled tetramer. P: pockets, Tet: tetramer, Dimi: dimer of triangular platform and pedestal, Dim2: dimer of rotor arm. (b) Exemplary negative staining TEM images of the full motor assembly with attached rotor arm imaged with a Philips CM100 microscope. Scale bar = 100 nm.

In the following, reference is made to the examples, which are given to illustrate, not to limit the present invention.

EXAMPLES

**Example 1**: Materials and Methods

Design of the DNA origami nanostructures

All structures were designed using cadnano0.2. The pedestal was folded from a 7585-bases long linearized custom scaffold, while the pedestal with torsional spring was folded from an 8064-bases long scaffold, as well as both rotor arm parts. The triangular platform was folded from a 9072-bases long scaffold [2].

Custom scaffold preparation

The circular scaffold with a length of 8064 bases was prepared from a 2 L stirred bioreactor. The circular scaffold of length 9072 bases, as well as the circular precursor of the linear scaffold of length 7585 where prepared from shaking flask cultures as previously described [2]. To linearize the scaffold, it was Zinc-digested.

Folding of the DNA origami nanostructures

All folding reaction mixtures contained a final scaffold concentration of 50 nM and oligonucleotide strands (Integrated DNA Technologies (IDT)) of 500 nM each (for the triangular platform) or 200 nM each (for the other structures). The folding reaction buffers contained 5 mM TRIS-HCl, 1 mM EDTA, 5 mM NaCl and 10 mM (rotor arms), 15mM (both pedestal variants) or 20 mM (triangular platform) MgCl2. The folding solutions were thermally annealed using TETRAD (MJ Research, now Biorad) thermal cycling devices. The reactions were left at 65°C for 15 minutes and were subsequently subjected to a thermal annealing ramp from 60°C to 44°C (1°C/hour). The folded structures were stored at room temperature until further sample preparation steps. All DNA sequences are available in the enclosed sequence listing.

Purification and concentration of the DNA origami nanostructures

All folded structures were purified from excess oligonucleotides either by PEG precipitation (rotor arms and pedestal variants) or by physical extraction from agarose gels (triangular platform). Gel purified monomers were concentrated using ultracentrifugation. The PEG purified rotor arm extension was additionally incubated with a set of connecting oligonucleotide strands at a $MgCl_2$ concentration of 10 mM for 1 hour at 30°C and subsequently again PEG precipitated. All procedures were performed as previously described [3].

Assembly of the rotary apparatus

As a first step the two dimers, triangular platform and pedestal (dimer 1) as well as the two rotor arm parts (dimer 2), were assembled by mixing a 1:1 solution of the respective monomers at a final $MgCl_2$ concentration of 40 mM (dimer 1) and 5 mM (dimer 2) and left at 40°C for at least 16 hours. Dimer 1 was then PEG precipitated to exchange the buffer to a final $MgCl_2$ concentration of 5 mM. Both dimers were mixed and incubated at 10 mM $MgCl_2$ for a minimum of 16 hours.

Agarose gel analysis of the DNA origami nanostructures

Folded and assembled DNA nanostructures were electrophoresed on 1.5% or 2% agarose gels containing 0.5x TBE and 5.5 mM $MgCl_2$ for 1.5 - 3 h at 90 or 100 V bias voltage in a water-cooled gel box. The electrophoresed agarose gels were stained with ethidium bromide and scanned using a Typhoon FLA 9500 laser scanner (GE Healthcare) at a resolution of 50 $\mu$m/pixel.

Negative stain transmission electron microscopy

5ul of sample was adsorbed onto glow-discharged Cu grids with carbon support (in house production and Science Services, Munich) and stained with a 2% aqueous uranyl formate solution containing 25 mM NaOH. Samples were incubated for different time lengths depending on the concentration. In general, structures with concentrations in the order of tens of nM were incubated for 30 s, while lower concentrated samples (5 nM or below) were incubated for 5 to 10 minutes. Images were acquired using a Philips CM100 operating at 100 kV.

Cryo electron microscopy sample preparation

The purified and concentrated sample was applied to glow-discharged C-Flat 2/1 4C (EMS) grids (Protochips) and plunge-frozen using a Vitrobot Mark V (FEI, now Thermo Scientific) at the following settings: temperature of 22 °C, humidity of 90 %, 0 s wait time, 3s blot time, -1 blot force, 0 s drain time.

Cryo electron microscopy image acquisition

The data was acquired on a Titan Krios G2 electron microscope operated at 300 kV equipped with a Falcon 3 direct detector using the EPU software (Thermo Scientific). A total exposure of 3.3s with a dose of 44 e/Angstom^2 split in 11 fractions was used.

Cryo electron microscopy image processing

The image processing was performed in Relion 3.0. The micrographs were motion corrected and contrast transfer function estimated using MotionCor2 and CTFFIND4.1, respectively. The particles were picked using Cryolo. The auto-picked particles were extracted from the micrographs and binned by 2, subjected to one round of 2D and 3D classification to remove falsely picked grid contaminations and damaged particles, and to address structural heterogeneity. A refined 3D map was reconstructed using a low-resolution initial model created in Relion. A total number of 38649 particles was used for the final reconstruction. The map was post-processed using a low pass filtered mask to calculate the FCSs and estimate the global resolution of 16 Angstroms with a manually set B-factor of -500.

Sample preparation for fluorescence measurements

Monomers were folded, purified and assembled as described before. Biotinylated oligos were incubated with a 32x excess of neutravidin (Thermo Fisher Scientific) and then added to the polymers in an ~10x excess to binding site for 1-2h at room temperature. The resulting reaction mixture was gel purified by extracting only the tetrameric species. Sample concentrations were ~100 pM. If needed, a set of two spacer oligonucleotide strands was added in an ~100x excess to the sample to mount the obstacles on the triangular platform. All samples were stored at room temperature until imaged at the microscope up to several weeks.

Total internal reflection fluorescence microscopy (TIRFM) movie acquisition with AC field

Biotin-PEG cover glass slide preparation, flow chamber production and TIRFM setup as previously described. The samples were diluted to below 100 pM in an imaging buffer (FMB 500) containing 500 mM NaCl, 100mM TRIS-HCl and 2 mM EDTA, added to the sample chamber and immobilize on the glass surface through biotin-streptavidin-biotin linkage. Unbound structures were removed by flushing with FMB 500 after ~5 min. The sample chamber was then flushed twice with the final imaging buffer (FMB 1.5) containing 150 mM TRIS-HCl, 1 mM EDTA, 1.5 M NaCl and including an oxygen scavenging system (OSS) with 2 mM Trolox (6-hydroxy-2,5,7,8-tetramethylchroman-2-carboxylic acid), 0.8% D-glucose, 2000 U/ml catalase and 165 U/ml glucose oxidase. For the torsional spring measurements 30% sucrose was added and the final NaCl concentration was lowered to 1M. Enzymes, Trolox and glucose were purchased from Sigma Aldrich. Finally, the sample chamber was filled completely with FMB 1.5 and a custom-made plug that secures 0.2 mm thick platinum wires, to which the operating voltage is applied, was attached on the top of the flow chamber. The applied voltage was controlled by a custom-built LabView routine that supplied control voltages to a custom-built operational amplifier to generate the final output voltage. Movies were acquired for 40 to 64 seconds at a frame rate of 250 frames/s with an applied uniaxial AC field of 0 - 60 V and frequencies of 1 - 100 Hz.

Total internal reflection fluorescence microscopy movie processing

Moving particles were manually localized, Gauss fitted and picked with the Picasso software. All successive steps were performed using a custom MATLAB script. From the tracking of the position of the rotor arm tips, the cumulative angular displacement was obtained. Additionally, angular velocities ($\Omega$) were calculated according to:

$$\Omega = \frac{\vartheta_{last} - \vartheta_{first}}{\Delta t}$$

Where $\vartheta$ is the angle at the respective frame (first and last frame of a period with or without the external AC field) and $\Delta t$ indicates the time difference between those two frames. A histogram of the angular velocities was calculated.

Total internal reflection fluorescence microscopy experiments for DNA PAINT

For DNA-PAINT super-resolution imaging, all three corners of the triangular platform were labelled with three transient DNA-PAINT binding sites. After rotor diffusion data was acquired, the FMB 1.5 imaging buffer including OSS was exchanged with DNA-PAINT imaging solution consisting of 1xTAE, 12 mM MgCl$_2$, 0.05% TWEEN20 and 20nM P1 imager strands. Prior to acquisition of DNA-PAINT data, rotor fluorophores were bleached by increased exposure to the 642nm excitation. Videos were recorded for 7,000 frames with 400 ms exposure and a 642nm excitation laser output of 70 mW. The spot detection of imager binding events and Gauss fitting of point spread functions, was performed with the "Localize" function of the Picasso software package. Subsequently, the "Render" function was used to visualize the resulting event list and correlate the DNA-PAINT super-resolution data with the data of rotor diffusion measurements.

Langevin dynamics simulation

For the simulation the inventors view the rotor arm as a Brownian particle in a time-dependent 1D energy landscape U({$\vartheta$,t). This allows us to write the first order equation

$$\lambda \frac{d\vartheta}{dt} = -\frac{\partial U(\vartheta)}{\partial \vartheta} + \eta(t)$$

with damping constant $\lambda$, and noise term $\eta$ that satisfies $\langle \eta(t)\eta(t') \rangle = 2k_B T\lambda\delta(t - t')$. This can be simulated using the well-known Euler-Maruyama method.

The energy landscape is made up of a time-independent rotor-intrinsic contribution and an alternating external electric field

$$U(\vartheta, t) = \frac{4a}{\pi} \cos(\vartheta)\, E(t) - b \sum_{n} \exp(-c(\vartheta - \vartheta_0 - n\Delta\vartheta)^2)$$

where

$$E(t) = \begin{cases} 1, & (t \bmod T) < \dfrac{T}{2} \\[2mm] -1, & (t \bmod T) \geq \dfrac{T}{2} \end{cases}$$

represents the alternating external electric field with oscillation period T. Parameters a, b, c denote the relative strengths of the electric field, the intrinsic rotor landscape and the width of the local energy minima, respectively. Additionally, $\vartheta_0$ describes the angle enclosed between rotor and field axis and the energy minima are placed apart by $\Delta\vartheta$. Note that, to ensure the link back to the rotational dynamics, $\Delta\vartheta$ must be a simple fraction of $2\pi$. To enhance the numerical stability, it is helpful to work with a differential energy landscape and hence the inventors approximate

$$E(t) \approx \sum_{n=1}^{N} \frac{\sin\left(\frac{nt}{T}\right)}{n}$$

for some large N.

Statistical drift analysis

The irreversibility analysis described in the main text and illustrated in Fig. 4 is conducted on data in the following manner. Given a time interval $\Delta t$ one computes all pairs $\Delta\vartheta_t = \vartheta_{n+t} - \vartheta_n$ from a time series $\{\vartheta_n\}$ where in this $\vartheta_n$ measures the angular position of the rotor including previous full rotations.

From these data, the inventors employ a kernel density estimation with gaussian kernels of the probability distribution $p(\vartheta_0 \bmod 360, \Delta\vartheta)$, representing a jump from position $\vartheta_0$ to $\vartheta_0 + \Delta\vartheta$. Using this distribution, the inventors compute

$$\frac{\Delta s}{k_B} = \left\langle \log\left[\frac{p(\vartheta_0 + \Delta\vartheta, t = nT | \vartheta_0, 0)}{p(\vartheta_0, t | \vartheta_0 + \Delta\vartheta, 0)}\right] \right\rangle_\vartheta$$

by averaging over initial positions $\vartheta_0 \in [0, 360)$. Analysis of each rotor k yields a function $\left(\frac{\Delta s}{k_B}\right)_k$ that follows an approximately linear trend independent of t. Estimated distributions over these functions are shown in Fig. 4 panels (e) and (f) for simulated and experimental rotors, respectively. The average slope of the resulting trend is proportional to the rotational bias. To account for the significant variation in rotational bias in different experimental rotors, all trends were renormalized to a unit slope in panel Fig. 4f. This renormalization step becomes ill-defined for unbiased rotors which were thus excluded.

**Example 2**: Motor operation principle

Consider a rotary arm pivoting on a stator constrained to uniaxial rotation in the horizontal plane (Fig. 6). The rotary arm can then be described as moving in a one-dimensional energy landscape on a closed circle with angular orientation as coordinate. The inventors' motor concept is based on the energy landscape containing one or multiple energetic minima, for instance two energetic minima as depicted in (Fig. 6c). To drive the motor, an alternating electric field with frequency f is applied via two electrodes that are mounted at a distance to the motor. In an electrolyte the field drives an ion current flowing along the field lines. Without wishing to be bound by any theory, the inventors assume that the field lines point along the vertical direction, and that the rotary arm is negatively charged. The alternating field adds an energetic contribution as depicted in exemplarily in Fig. 6f bottom for an AC field with rectangular wave form in the two half periods of a field cycle. With a non-zero AC field, the motor thus moves in a dynamically modulated energy landscape and tends to populate the global energy minimum in each field half period. However, depending on the orientation of the energetic minima in the motor relative to the direction of the electric field, the symmetry can be broken and the motor can be driven to move with a preferred rotation direction. In the example shown in Fig. 6d, the motor will first be located at the global minimum located at 45° (Fig. 6d top left). Once the field is inverted, it will escape from the local minima, but it will preferentially move clockwise toward the global minimum at 225° because the counterclockwise direction is energetically disfavored by an energetic barrier in a Boltzmann-weighted fashion. For each field inversion, a clockwise movement will be kinetically favoured. Hence, as the AC cycles accumulate, the motor will run in clockwise direction with a certain average rotational speed. More generally, in the motor concept the effective directionality of the motor depends on the location of the minima in the motor energy landscape relative to the axis of the field, which can be understood by inspecting the effective energy landscape in the presence of a non-zero field plotted as a function of the angular coordinate and time (Fig. 4c) and considering that the motor will seek out the minimum energy states driven by Brownian diffusion as time goes by.

Without wishing to be bound by any theory, the inventors believe that it is possible to invert the asymmetry in the energy landscape and thus the rotation direction of the motor by simply switching the direction of the field by 90°, for example by using a second set of electrodes. Regarding the influence of the field amplitude and AC frequency on the speed of the rotor, the stronger the field, the larger the kinetic asymmetry will be, which will increase the directional bias and thus the average rotational speed. However, at very high field amplitudes, the symmetry-breaking features of the energy landscape may become negligible, and the directional bias may decrease. In the limit of very low AC frequencies, the average rotational speed will be lower, since the maximum possible rpm is given by the AC frequency in the limit of perfect direction bias.

**Example 3**: Experimental demonstration

The inventors used the methods of multilayer DNA origami to design and fabricate several motor prototypes, as described in Example 1. The objects were by default negatively charged, since DNA carries one negative elementary charge per base at the pH used in the experiments. The inventors encoded their candidate designs in DNA sequences and self-assembled the designs in one-pot reaction mixtures using previously described methods. The inventors assessed the quality of self-assembly using gel-electrophoretic mobility analysis and by imaging with negative-staining transmission electron microscopy (TEM). The inventors also analyzed selected prototypes using single particle cryo EM. To reveal the motion of the motors in real-time, the inventors acquired movies using single-particle total internal reflection fluorescence microscopy. To this end, the stators were rigidly attached to microscope glass cover slips using multiple biotin-neutravidin bonds per stator, and the inventors attached multiple fluorescent dyes at the tips of the rotary lever arms to allow determining their orientation using super-resolution centroid tracking. The setup also included a set of platin electrodes for applying electric fields.

One motor variant consisted of a 40 nm tall and 30 nm wide pedestal onto which the inventors fixed an equilateral triangular platform with 60 nm long edges and 13 nm thickness. (Fig. 1a, b). A section of the pedestal protrudes through the central cavity of the triangle platform. The inventors fixed a 550 nm long rotor arm onto a pivot point near the midpoint of the triangular platform on the pedestal (Fig. 1c). The pivot point was a stretch of single-stranded DNA with sequence CAT. The rotor arm consisted of ten DNA double-helices arranged in a honeycomb lattice pattern. Such helical bundles have persistence lengths in the multiple-micrometer regime. The rotor arm can thus be regarded as a rigid but elastic rod. The rotor arm protrudes on either side to the pivot point beyond the edges of the triangular platform. With this design, the rotor arm is constrained sterically to uniaxial rotations around the pivot point in the plane of the triangle. To create a ratchet-like energy landscape with several minima, the inventors installed physical obstacles on the three edges of the triangular platform (Fig. 1b). The obstacles consisted of 18 nm long rectangular plates that protruded with an inclination of about 50° from the surface of the triangular platform. The plates were held rigidly at this angle with a set of double helical spacers. To overcome the obstacles when sweeping over the triangle platform, the rotor arm must bend upwards. The bending constitutes an energetic barrier that can trap the rotor in between obstacles in a Boltzmann-weighted fashion. The 3D shape of the rotor platform was validated by a 3D density map that the inventors determined using single particle cryo EM (Fig. 2a, b).

The single particle TIRF movies that the inventors collected from this motor design in the absence of any driving field revealed rotating particles in which the rotor arm preferentially dwelled in six discrete positions (Fig 2d). These positions corresponded to orientations with the rotor arm trapped on either side of the protruding obstacles, which the inventors determined using two-color DNA PAINT imaging (Fig. 2e, PAINT IMAGES). The DNA-PAINT images also provide a compelling illustration of the relative dimensions of triangle platform versus rotor arm.

Since the inventors have installed only three protruding obstacles on the platform, at first glance six preferred orientations seem unexpected. The inventors can understand this behavior, however, with the help of the simple schematic shown in Fig. 2b: the two ends of the lever arm get trapped with one end before the steep slope of an obstacle and with the other end right before the slight side of another obstacles. Such orientations occur exactly six times, which explains the six dwelling sites observed in the experiments.

**Example 4:** Driving the motor, controlling speed and directionality.

At zero field, the motor particles displayed unbiased random Brownian rotary movements with vanishing cumulative angular displacements (Fig. 3A - U = 0 V). However, when the inventors applied an AC field along the vertical, the inventors observed many particles that rotated quite obviously with a strong unidirectional bias (Fig. 3a - U = 20 V). The effective rotational speed depended on AC frequency (Fig. 3e - example traces frequency sweep, Fig. 3g left - absolute angular speeds vs frequency). The directional bias vanished at high AC frequencies (around 100 Hz). The speed could also be controlled by AC field amplitude (Fig. 3f, example traces voltage sweep, Fig. 3g right - absolute angular speeds vs voltage). The maximum effective rotational speed the inventors recorded was 246 rpm.

Without wishing to be bound by any theory, the inventors believe that the directionality and the strength of the bias depends on the location of the energy minima relative to the field axis. The inventors deposited the motor particles with random orientations on the microscopy cover slip, hence the inventors expect approximately equal number of particles running clockwise and counterclockwise - which is exactly what the inventors observed (Fig. 3b right). Without wishing to be bound by any theory, the inventors hypothesized that it is possible to invert the direction of rotation of the motors by simply switching the field axis by 90°. To test this hypothesis, the inventors used a second set of electrodes to rotate the AC field axis by 180° in 5° steps. The inventors did indeed observe a sinusoidal dependency of motor speed on field direction, including direction reversal (Fig. 3c). The inventors aligned the angular speed versus field orientation data and computed average and standard deviation of angular speed over an ensemble of 75 motor particles, which provides an impression of the motor-to-motor speed variability (Fig. 3d). An overall sinusoidal trend becomes apparent, in which a maximum angular speed in clockwise and counterclockwise direction can be observed for a AC field axis being rotated by 90° - just as the inventors explained above with the illustrative example of a motor featuring two energy minima.

To test the universality of the driving mechanism, the inventors also analyzed the dynamics of several other motor variants including a highly simplified motor prototype, which consisted only of the rotor arm described above directly attached with a single strand of DNA to a coverslip glass surface. This configuration affords next to no control over the details of the energy landscape in which the motor moves. Instead, the energy landscape for rotation will be created by local details of the glass surface environment onto which the rotor arm is anchored. Nonetheless, also this motor and every other variant that the inventors tested showed directional rotation, upon applying an AC field. Interestingly, a variant where the inventors anchored the rotor arm directly on the pedestal lacking the triangular platform showed the lowest propensity for unidirectional rotation which probably reflects that in this design the rotor moved over an essentially flat energy landscape.

**Example 5**: Discussion

The motors of the invention afford the control options one is familiar with from macroscopic rotary motors: the user can turn them on and off at will, they respond quickly, and the speed and the direction of rotation can be regulated. One other hand, the motors can also be regarded autonomous to some degree, because they move directionally due to their intrinsic mechanistic properties, which means that the user does not need to monitor the state of the motor to actually control the motion. This autonomy is also reflected in the fact that the motors are not synchronized. Our system may be contrasted with previously demonstrated non-autonomous nanoelectromechanical rotors and DNA robot arms that were directly manipulated by the action of cyclically rotated electric fields. These systems moved in response to direct user action and did not yet possess the intrinsic properties necessary to drive directional motion by fluctuation-induced ratcheting.

The motor operating principle that the inventors present can be understood within the theoretical framework of a rocking ratchet concept, where an alternating additive force with vanishing time average acts on a particle diffusing in a periodic, asymmetric energy landscape. In the inventors rocking ratchet, the torques caused by the field vanish when the negatively charged rotors point toward the anode, the torque is maximal at orientations perpendicular to the anode, and there is a metastable state in the direction of the cathode.

The motor operating concept is universal and can be applied to many other systems. Instead of DNA origami, protein-based rotary assemblies featuring charged residues could be designed and could be driven to rotate with directional bias by AC fields. On a smaller scale, charged small molecules produced by chemical synthesis could also be anchored to surfaces and driven directionally by AC fields. Furthermore, instead of electric fields, other perturbations that alternate in directionality could be used as well. For example, alternating magnetic fields could drive Brownian rotors having a magnetic moment, and alternating fluid or gas flows may drive directional rotation through periodically alternating drag forces.

From a practical point of view, the motor concept is compellingly simple to implement. The motors reliably rotate with several orders-of-magnitudes higher speeds than previously created synthetic DNA motors. They can be produced by anyone having access to standard wet lab equipment. Mass production is also possible. Due to the modularity of the DNA origami components, the inventors expect that the motors can also be easily modified, adapted, and integrated into other contexts to be used as pumps or as nanoturbines to drive fluid flow. Furthermore, it has been recently described how to place and orient DNA-based nanostructures on solid state surfaces in a programmable fashion. These methods could be used to build arrays of motors with controlled stator orientation relative to the field axis. Based on microscopic reversibility, it is also conceivable to exploit the directed motion to drive uphill chemical synthesis using a more elaborate synthetic mechanism featuring coordinated reciprocal motion- much like FiFo ATP synthase synthesizes ATP through rotary motion driven by ion flow.

**Example 6:** Further experimentation

The inventors used the methods of multilayer DNA origami to design and fabricate a prototype of a ratchet motor. The motor consisted of a 40 nm tall and 30 nm wide pedestal onto which an equilateral triangular platform with 60 nm long edges and 13 nm thickness (Fig. 1) was fixed. A section of the pedestal that protrudes through the central cavity of the triangular platform includes a docking site for a rotor arm. The rotor dock is fixed via a pivot point consisting of three unpaired nucleotides near the midpoint of the triangular platform on the pedestal. The rotor arm consists of two end-to-end joined rigid rod modules (each a separate DNA origami) (Fig. id, e) with a total length of 550 nm. The length was chosen to enable tracking angular orientation changes of individual motors in real time in a diffraction-limited fluorescence microscope and to slow down angular motions, inspired by the classic experiments by Kinosita and others that revealed the rotation of individual F-actin labelled F1 ATPase motors. The rod modules consisted of ten DNA double-helices arranged in a honeycomb lattice pattern (Fig. id, e). Such helical bundles have previously been shown to have persistence lengths in the multiple-micrometer regime. The rotor arm can thus be regarded as a rigid but elastic rod. The rotor arm protrudes on either side to the pivot point beyond the confines of the triangular platform. With this design, the rotor arm is constrained sterically to uniaxial rotations around the pivot point within the plane of the triangle.

To create a corrugated energy landscape, physical obstacles on the three edges of the triangular platform were installed (Fig. 1b). The obstacles consist of 18 nm long rectangular plates that protrude with an inclination of about 50° from the surface of the triangular platform. The plates were held rigidly at this angle with a set of double helical spacers. To overcome the obstacles when sweeping over the triangular platform, the rotor arm must bend upwards. The bending constitutes an energetic barrier that can trap the rotor in between obstacles in a Boltzmann-weighted fashion. The motor design also includes functional modifications such as biotin moieties and fluorescent dyes (Fig. 1F) to enable experimental observation of the motion of individual motor particles. With the biotin moieties, the stators can be rigidly attached to microscope glass cover slips via multiple biotin-neutravidin bonds per stator, and the multiple fluorescent dyes at the tips of the rotary arm allow determining its orientation using centroid tracking relative to the position of the separately labeled triangular platform (Fig. 1F).

To operate the motor as a Brownian ratchet and drive directed rotary motion, the system can be taken out of thermal equilibrium. The symmetry can be broken upon time reversal for the ratchet effect to materialize. The inventors found that this can be achieved in an attractively simple fashion: it suffices to apply an irrotational AC field using two electrodes immersed into the liquid chamber (Fig. 1F, Fig. 5). The field causes an alternating ion current (AC) flowing through the sample chamber along a fixed direction, which dynamically modulates the energy landscape in which each motor moves. Note that the time-averaged net force created by this external modulation is zero, and that its curl is zero. Hence, there is no information supplied by the external modulation that could dictate a rotation of the motor. Instead, directed, autonomous rotary motion emerges from the intrinsic details of the motor mechanism in the presence of the modulation as discussed below.

The inventors encoded their design in DNA sequences (SEQ ID NOs. 1-1125) and self-assembled the motors in one-pot reaction mixtures using previously described procedures. The inventors assessed the quality of self-assembly using gel-electrophoretic mobility analysis (Fig. 7) and validated the three-dimensional shape of the motor complex including the pedestal, the triangular platform, and the rotor dock with a 3D electron density map that the inventors determined using single particle cryo electron microscopy (cryo-EM) (Fig. 2a, b). Within the resolution, the electron density map displayed all desired major structural features including the obstacles and the rotor dock. The inventors also validated the correct assembly of the full motor complex featuring the full-length rotor arm by imaging with negative-staining transmission electron microscopy (TEM) (Fig. 2c).

Next, the inventors studied the diffusive motions of the motors using single-particle total internal reflection fluorescence (TIRF) microscopy of surface-immobilized motor particles. The single particle TIRF movies that were collected in the absence of any driving field revealed randomly rotating particles in which the rotor arm preferentially dwelled in six discrete positions (Fig. 2d, Fig. 8). These positions corresponded to orientations with the rotor arm trapped on either side of the protruding obstacles, which the inventors established using DNA PAINT imaging (Fig. 2e, Fig. 10). The DNA-PAINT images also provide a compelling illustration of the relative dimensions of triangular platform versus the much longer rotor arm. The motor complex thus realizes a diffusive rotary mechanism featuring multiple energetic minima and transition barriers that separate the minima.

Importantly, in the absence of an external energy supply, i.e., when the field is off, the motor particles displayed unbiased random rotary movements with vanishing cumulative angular displacements, as expected from equilibrium fluctuations in an energy landscape (Fig. 3a). By contrast, when the inventors turned on the AC field, e.g., fixed along the vertical direction, the inventors observed many motor particles that immediately changed from random, undirected rotation to processive rotation with a strong directional bias (Figs. 3a). The maximum angular velocity the inventors recorded was approximately 250 full turns per minute (Fig. 3b). The inventors observed approximately equal numbers of motors running processively in clockwise and counterclockwise direction, respectively, when the field was turned on (Fig. 3b).

The inventors then characterized the dynamics of individual motors as a function of AC field frequency, amplitude, and axis of the field. The effective angular velocity of the motors strongly depended on AC frequency, with an optimum at around 5 Hz driving frequency (Fig. 3e, Fig. 3g left). The directional bias of rotation was absent at DC fields, and it also decreased at high AC frequencies (around 100 Hz). Similarly, the angular velocity of the motors could also be controlled by the AC field amplitude, showing an optimal effective angular velocity within the amplitude band between 20 and 60 V (Fig. 3f, Fig. 3g right). Furthermore, the direction of rotation and the effective angular velocity could be controlled by the static direction of the AC field relative to the particles: the inventors studied the same set of motor particles when the field was off, and when the uniaxial AC field pointed into the horizontal and then into the vertical direction (relative to the coordinates defined by the TIRF microscope field of view). For a subset of particles, the direction of rotation of individual motors followed sinusoidal dependency of motor speed on field direction, including direction reversal when rotating the AC field axis (Fig. 3c, d). For all motor particles it was evident that the orientation of the motor relative to the field axis is a key determinant of the actual direction and velocity of processive rotation.

Based on the data recorded the inventors can estimate the torque and the work done on the environment by the motors, which in the experiments for Fig. 3 was simply dissipated in the form of frictional drag of the long rotor arm with the solvent. The rotational friction coefficient for the rotor arm ($\zeta_r = \pi\eta L^3$) is ~ 4*10$^{-22}$ N*m*s. Based on the maximum observed angular velocity of around ~ 25 radians/s (~1500 °/s), the inventors arrive at a maximum torque of approximately 10 pN*nm, which may be compared to the 50 pN*nm that F1F0 ATPase can generate. The estimated maximum power of the motors dissipated in friction was around 250 pN*nm/s (62 $k_B$T/s) which corresponds to the equivalent of the free energy delivered by the hydrolysis of approximately 2.5 ATP molecules per second at cellular conditions.

The motors show an overall symmetric distribution of trajectories and angular velocities (Figs. 3a, b). The inventors can gain insight into the mechanism of directionality selection for each motor particle in the system by looking at the space-time energy landscapes in Fig. 4c, computed exemplarily for different stator-field orientations of a simplified two-minima rotary motor. Langevin dynamics simulations in these energy landscapes lead to rotation trajectories with CW, CCW and absence of directional bias, respectively, depending on the relative orientation of the motor energy landscape to the field axis. The asymmetry needed for net directionality selection (bias) is provided by the interplay between the background static potential landscape provided by the motor body and the external modulating field and its initial phase. In other words, depending on the orientation of the stator relative to the axis of the field, the time inversion symmetry can be broken and the motor ratchets along a preferred rotation direction. Moreover, the predicted effective motor velocity depends on the extent of kinetic asymmetry for CW vs CCW motion as induced by the AC field, which again depends on how the stator is oriented relative to the field axis. Since the inventors randomly deposited motor particles on microscopy cover slides, the inventors obtained an approximately uniform sampling of stator orientations relative to the field axis, and thus a sampling of motors moving processively clockwise or counterclockwise at various speeds (Fig. 3b).

The inventors now prove the irreversibility of the mechanism at the level of individual motors by analyzing the properties of their fluctuations in the context of stochastic thermodynamics. If the inventors compile the distribution of displacement angles as a function of time (at multiples of the AC field period $T$), the inventors will observe that the rotors will naturally take stochastic steps along the direction of the bias and also against it (Fig. 4d; see also Fig. 3a). Stochastic thermodynamics allows us to probe the degree of entropy production in a nonequilibrium system with a finite trajectory, from the ratio between the upstream and downstream transition rates. Denoting P($\theta_0 + \Delta\theta$, t|$\theta_0$,0) as the probability of rotation by angle $\Delta\theta$ over the period t from the initial position of $\theta_0$, the inventors expect a fluctuation relation that probes irreversibility by extracting the average entropy production $\Delta s$ in the nanomotors over the period of time $t = nT$ (an integer multiple of the period of the AC field), in the form of

$$\frac{\Delta s}{k_B} \equiv \left\langle \ln\left[\frac{\mathrm{P}(\theta_0 + \Delta\theta, t = nT|\theta_0,0)}{\mathrm{P}(\theta_0, t = nT|\theta_0 + \Delta\theta,0)}\right]\right\rangle_{\theta_0} = \frac{\omega_{\mathrm{eff}}}{D_{\mathrm{eff}}}\frac{\Delta\theta}{2\pi}$$

where $\omega_{\mathrm{eff}}$ and $D_{\mathrm{eff}}$ represent the effective angular velocity and diffusion coefficient of the nanomotors throughout the stochastic ratcheting dynamics. Note that this relation is independent of time $t = nT$. This relation holds in the simulations that the inventors performed (Fig. 4e), and, importantly, also in the experimental data of processive rotating motors (Fig. 4f), as seen by the collapse of all the plots to a line of slope unity in the nonequilibrium cases through a rescaling of the slopes. The nonequilibrium drive can also be probed in the mean-squared displacement (MSD) that shows a crossover from diffusive to ballistic behaviour.

The inventors have also directly demonstrated that the motors can drive directionally and generate torque against an additional external load. To this end, the inventors designed additional motor variants which included a torsional spring at the pivot point (Fig. 4g, Fig. 12). The torsional spring consisted of a single-stranded DNA loop with one end fixed on the pedestal and the other on the rotor arm. Hence, rotor rotations will wind the loop as an entropic spring around the rotor pivot connection. The torsional spring would play the role of a harmonic potential and provide a restoring force that eventually makes the motor stall once the torque created by the wound-up spring balances the maximum torque delivered by the motor. The thus tensioned spring then serves as an energy reservoir that can drive the rotor in the opposite direction when the external energy supply is shut off, until the spring is relaxed again. This predicted behaviour is exactly what the inventors observed: individual particles featuring the torsion spring showed processive rotation when the AC field was on until stalling, and then immediately began to rotate processively into the opposite direction once the AC field was shut off (Fig. 4g).

In conclusion, the system provides a solution to a long-standing challenge in the field of nanotechnology: the inventors constructed an autonomous macromolecular rotary motor that, unexpectedly, can perform work on the environment against external loads, and that achieves rotational speeds and torques that are approaching those known from powerful natural molecular machines such as the ATP synthase. Advantageously, the motors move directionally and autonomously due to intrinsic mechanistic properties, powered by a simple external energy modulation that does not need any feedback or information supplied by the user to direct the motors. Despite the autonomy, advantageously, the motors still afford the control options one is familiar with from macroscale motors: the user can turn them on and off at will, they respond quickly, and the speed and the direction of rotation can be regulated.

From a practical point of view, the motor described herein is compellingly simple to implement. It quite literally suffices to stick two wires into the liquid solution and apply an AC voltage. Advantageously, the motors can be produced and operated by anyone having access to standard wet lab equipment. Furthermore, a great advantage of the nanomotors of the present invention is that a mass production of the required DNA molecules is possible. Due to the modularity of the DNA origami components, the motors can also be easily modified, adapted, and integrated into other contexts. It has been recently described how to place and orient DNA origami objects on patterned solid-state surfaces in a programmable fashion. These methods could be used to build arrays of motors with controlled stator orientation relative to the field axis, to achieve rotation direction synchronization.

The motor design and operating concept is also applicable to other systems beyond DNA origami. For example, protein-based rotary assemblies featuring charged residues can be designed *de novo* and can be driven to rotate with directional bias by AC fields. Furthermore, instead of electric fields, other energy supplies that alternate in directionality such as alternating fluid flows can be used as well. The directed motor motion can be exploited to drive uphill chemical synthesis using a more elaborate synthetic mechanism featuring coordinated reciprocal motion - much like F1F0 ATP synthase mechanically synthesizes ATP driven by rotary motion.

**Example 7**: Sequences

SEQ ID NO.1: scaffold sequence used for the pedestal (stator first domain)

SEQ ID NO. 2-224: pedestal sequences (stator first domain)

SEQ ID NO. 2-224 are nucleic acid sequences encoding core_01, core_02, core_03, core_04, core_05, core_06, core_07, core_08, core_09, core_10, core_11, core_12, core_13, core_14, core_15, core_16, core_17, core_18, core_19, core_20, core_21, core_22, core_23, core_24, core_25, core_26, core_27, core_28, core_29, core_30, core_31, core_32, core_33, core_34, core_35, core_30, core_37, core_38, core_39, core_40, core_41, core_42, core_43, core_44, core_45, core_46, core_47, core_48, core_49, core_50, core_51, core_52, core_53, core_54, core_55, core_56, core_57, core_58, core_59, core_60, core_61, core_62, core_63, core_64, core_65, core_66, core_67, core_68, core_69, core_70, core_71, core_72, core_73, core_74, core_75, core_76, core_77, core_78, core_79, core_80, core_81, core_82, core_83, core_84, core_85, core_86, core_87, core_88, core_89, core_90, core_91, core_92, core_93, core_94, core_95, core_96, core_97, core_98, core_99, core_100, core_101, core_102, core_103, core_104, core_105, core_106, core_107, core_108, core_109, core_110, core_111, top_01, top_02, top_03, top_04, top_05, top_06, top_07, top_08, top_09, top_10, top_11, top_12, top_13, top_14, top_15, top_16, top_17, top_18, top_19, top_20, top_21, top_22, top_23, top_24, top_25, top_26, top_27, top_28, top_29, top_30, top_31, top_32, top_33, top_34, top_35, top_36, top_37, top_38, top_39, top_40, top_41, top_42, top_43, bottom_01, bottom_02, bottom_03, bottom_04, bottom_05, bottom_06, bottom_07, bottom_08, bottom_09, bottom_10, bottom_11, bottom_12, bottom_13, bottom_14, bottom_15, bottom_16, bottom_17, bottom_18, bottom_19, bottom_20, bottom_21, bottom_22, bottom_23, bottom_24, bottom_25, bottom_26, bottom_27, bottom_28, bottom_29, bottom_30, bottom_31, bottom_32, bottom_33, bottom_34, bottom_35, bottom_36, bottom_37, bottom_38, bottom_39, bottom_40, bottom_41, bottom_42, connection_to_triangle_01, connection_to_triangle_02, connection _to_triangle_03, connection_to_triangle_04, connection_to_triangle_05, connection_to_triangle_06, connection_to_triangle_07, connection_to_triangle_08, connection_to_triangle_09, connection_to_triangle_10, connection_to_triangle_11, connection_to_triangle_12, for_biotin_anchor_01, for_biotin_anchor_02, for_biotin_anchor_03, for_biotin_anchor_04, for_biotin_anchor_05, for_biotin_anchor_06, for_biotin_anchor_07, for_biotin_anchor_08, for_biotin_anchor_09, rotor_arm_dock_01, rotor_arm_dock_02, rotor_arm_dock_03, rotor_arm_dock_04, rotor_arm_dock_05, and rotor_arm_dock_06, respectively.

SEQ ID NO. 225-465: sequences used for triangle (optional stator second domain)

SEQ ID NO. 225-465 are nucleic acid sequences encoding side1_01, side1_02, side1_03, side1_04, side1_05, side1_06, side1_07, side1_08, side1_09, side1_10, side1_11, side1_12, side1_13, side1_14, side1-15, side1_16, side1_17, side1_18, side1_19, side1_20, side1_21, side1_22, side1_23, side1_24, side1_25, side1_26, side1_27, side1_28, side1_29, side1_30, side1_31, side1_32, side1_33, side1_34, side1_35, side1_36, side1_37, side1_38, side1_39, side1_40, side1_41, side1_42, side1_43, side1_44, side1_45, side1_46, side2_01, side2_02, side2_03, side2_04, side2_05, side2_06, side2_07, side2_08, side2_09, side2_10, side2_11, side2_12, side2_13, side2_14, side2_15, side2_16, side2_17, side2_18, side2_19, side2_20, side2_21, side2_22, side2_23, side2_24, side2_25, side2_26, side2_27, side2_28, side2_29, side2_30, side2_31, side2_32, side2_33, side2_34, side2_35, side2_36, side2_37, side2_38, side2_39, side2_40, side2_41, side2_42, side2_43, side2_44, side2_45, side2_46, side2_47, side3_01, side3_02, side3_03, side3_04, side3_05, side3_06, side3_07, side3_08, side3_09, side3_10, side3_11, side3_12, side3_13, side3_14, side3_15, side3_16, side3_17, side3_18, side3_19, side3_20, side3_21, side3_22, side3_23, side3_24, side3_25, side3_26, side3_27, side3_28, side3_29, side3_30, side3_31, side3_32, side3_33, side3_34, side3_35, side3_36, side3_37, side3_38, side3_39, side3_40, side3_41, side3_42, side3_43, side3_44, side3_45, side3_46, side3_47, side3_48, corner_3.1_01, corner_3.1_02, corner_3.1_03, corner_3.1_04, corner_3.1_05, corner_3.1_06, corner_3.1_07, corner_3.1_08, corner_3.1_09, corner_3.1_10, corner_3.1_11, corner_3.1_12, corner_3.1_13, corner_3.1_14, corner_3.1_PAINT_pos_01, corner_3.1_PAINT_pos_02, corner_3.1_PAINT_pos_03, corner_1.2_01, corner_1.2_02, corner_1.2_03, corner_1.2_04, corner_1.2_05, corner_1.2_06, corner_1.2_07, corner_1.2_08, corner_1.2_09, corner_1.2_10, corner_1.2_11, corner_1.2_12, corner_1.2_PAINT_pos_01, corner_1.2_PAINT_pos_02, corner_1.2_PAINT_pos_03, corner_2.3_01, corner_2.3_02, corner_2.3_03, corner_2.3_04, corner_2.3_05, corner_2.3_06, corner_2.3_07, corner_2.3_08, corner_2.3_09, corner_2.3_10, corner_2.3_11, corner_2.3_12, corner_2.3_13, corner_2.3_14, corner_2.3_18, corner_2.3_PAINT_pos_01, corner_2.3_PAINT_pos_02, corner_2.3_PAINT_pos_03, obstacle1_01, obstacle1_02, obstacle1_03, obstacle1_04, obstacle1_05, obstacle1_06, obstacle1_07, obstacle1_08, obstacle1_09, spacer1_01, spacer1_02, obstacle2_01, obstacle2_02, obstacle2_03, obstacle2_04, obstacle2_05, obstacle2_06, obstacle2_0$_7$, obstacle2_08, obstacle2_0$_9$, obstacle2_10, spacer2_01, spacer2_02, obstacle3_01, obstacle3_02, obstacle3_03, obstacle3_04, obstacle3_05, obstacle3_06, obstacle3_07, obstacle3_08, obstacle3_09, spacer3_01, spacer3_02, spacer_complement_01, spacer_complement_02, corner_3.1_forPAINT_01, corner_3.1_forPAINT_02, corner_3.1_forPAINT_03, corner_3.1_forPAINT_04, corner_i. 2_forPAINT_01, corner_i. 2_forPAINT_02, corner_i. 2_forPAINT_03, corner_1.2_forPAINT_04, corner_1.2_forPAINT_05, corner_2.3_forPAINT_01, corner_2.3_forPAINT_02, corner_2.3_forPAINT_03, corner_2.3_forPAINT_04, and PAINT_Atto655_imager, respectively.

SEQ ID NO. 466-679: rotor arm I sequences

SEQ ID NO. 466-679 are nucleic acid sequences encoding core_01, core_02, core_0$_3$, core_04, core_05, core_06, core_07, core_08, core_09, core_10, core_11, core_12, core_13, core_14, core_15, core_16, core_17, core_18, core_19, core_20, core_21, core_22, core_23, core_24, core_25, core_26, core_27, core_28, core_29, core_30, core_31, core_32, core_33, core_34, core_35, core_36, core_37, core_38, core_39, core_40, core_41, core_42, core_43, core_44, core_45, core_46, core_47, core_48, core_49, core_50, core_51, core_52, core_53, core_54, core_55, core_56, core_57, core_58, core_59, core_60, core_61, core_62, core_63, core_64, core_65, core_66, core_67, core_68, core_69, core_70, core_71, core_72, core_73, core_74, core_75, core_76, core_77, core_78, core_79, core_80, core_81, core_82, core_83, core_84, core_85, core_86, core_87, core_88, core_89, core_90, core_91, core_92, core_93, core_94, core_95, core_96, core_97, core_98, core_99, core_100, core_101, core_102, core_103, core_104, core_105, core_106, core_107, core_108, core_109, core_110, core_111, core_112, core_113, core_114, core_115, core_116, core_117, core_118, core_119, core_120, core_i2i, core_i22, core_123, core_124, core_125, core_126, core_127, core_128, core_129, core_130, core_131, core_132, core_133, core_134, core_135, core_136, core_137, core_138, core_139, core_140, core_141, core_142, core_143, core_144, core_145, core_146, core_147, core_148, core_149, core_150, core_151, core_152, core_153, core_154, core_155, core_156, core_157, core_158, core_159, core_160, core_161, core_162, core_163, core_164, core_165, core_166, core_167, core_168, core_169, core_170, core_171, core_172, core_173, core_174, core_175, core_176, core_177, core_178, core_179, core_180, core_181, core_182, core_183, core_184, core_185, core_186, core_187, core_188, core_189, end_01, end_02, end_03, end_04, end_05, end_06, end_07, connection_to_pedestal_01, connection_to_pedestal_02, connection_to_pedestal_03, connection_to_pedestal_04, connection_to_pedestal_05, connection_to_pedestal_06, connection_to_pedestal_07, connection_to_pedestal_08, connection_to_pedestal_09, connection_to_pedestal_w_spring_01, connection_to_pedestal_w_spring_02, connection_to_pedestal_w_spring_03, connection_to_pedestal_w_spring_04, connection_to_pedestal_w_spring_05, connection_to_pedestal_w_spring_06, connection_to_pedestal_w_spring_07, connection_to_pedestal_w_spring_08, and connection_to_pedestal_w_spring_09, respectively.

SEQ ID NO. 680-892: rotor arm II sequences

SEQ ID NO. 680-892 are nucleic acid sequences encoding core_01, core_02, core_03, core_04, core_05, core_06, core_07, core_08, core_09, core_10, core_11, core_12, core_13, core_14, core_15, core_i6, core_17, core_18, core_19, core_20, core_21, core_22, core_23, core_24, core_25, core_26, core_27, core_28, core_29, core-30, core_31, core_32, core_33, core_34, core_35, core_36, core-37, core_38, core_39, core_40, core_41, core_42, core_43, core_44, core_45, core_46, core_47, core_48, core_49, core_50, core_51, core_52, core_53, core_54, core_55, core_56, core_57, core_58, core_59, core_60, core_61, core_62, core_63, core_64, core_65, core_66, core_67, core_68, core_69, core_70, core_71, core_72, core_73, core_74, core_75, core_76, core_77, core_78, core_79, core_80, core_81, core_82, core_83, core_84, core_85, core_86, core_87, core_88, core_89, core_90, core_91, core_92, core_93, core_94, core_95, core_96, core_97, core_98, core_99, core_100, core_101, core_102, core_103, core_104, core_105, core_106, core_107, core_108, core_109, core_110, core_111, core_112, core_113, core_114, core_115, core_116, core_117, core_118, core_119, core_120, core_i2i, core_i22, core_123, core_124, core_125, core_126, core_127, core_128, core_129, core_130, core_131, core_132, core_133, core_134, core_135, core_136, core_137, core_138, core_139, core_140, core_141, core_142, core_143, core_144, core_145, core_146, core_147, core_148, core_149, core_150, core_151, core_152, core_153, core_154, core_155, core_156, core_157, core_158, core_159, core_160, core_161, core_162, core_163, core_164, core_165, core_166, core_167, core_168, core_169, core_170, core_171, core_172, core_173, core_174, core_175, core_176, core_177, core_178, core_179, core_180, core_181, core_182, core_183, core_184, core_185, core_186, core_187, core_188, core_189, core_190, core_191, core_192, core_193, core_194, core_195, core_196, core_197, tip_dye_01, tip_dye_02, tip_dye_03, tip_dye_04, tip_dye_05, tip_dye_06, tip_dye_07, tip_dye_08, tip_dye_09, tip_dye_10, connection_betw._rotor_arms_01, connection_betw._rotor_arms_02, connection_betw._rotor_arms_03, connection_betw._rotor_arms_04, connection_betw._rotor_arms_05, and connection_betw._rotor_arms_06, respectively.

SEQ ID NO. 893-1125: pedestal with torsional spring

SEQ ID NO. 893-1125 are nucleic acid sequences encoding core_01, core_02, core_03, core_04, core_05, core_06, core_07, core_08, core_09, core_10, core_11, core_12, core_13, core_14, core_15, core_16, core_17, core_18, core_19, core_20, core_21, core_22, core_23, core_24, core_25, core_26, core_27, core_28, core_29, core_30, core_31, core_32, core_33, core_34, core_35, core_36, core_37, core_38, core_39, core_40, core_41, core_42, core_43, core_44, core_45, core_46, core_47, core_48, core_49, core_50, core_51, core_52, core_53, core_54, core_55, core_56, core_57, core_58, core_59, core_60, core_61, core_62, core_63, core_64, core_65, core_66, core_67, core_68, core_69, core_70, core_71, core_72, core_73, core_74, core_75, core_76, core_77, core_78, core_79, core_80, core_81, core_82, core_83, core_84, core_85, core_86, core_87, core_88, core_89, core_90, core_91, core_92, core_93, core_94, core_95, core_96, core_97, core_98, core_99, core_100, core_101, core_102, core_103, core_104, core_105, core_106, core_107, core_108, core_109, core_110, core_111, core_112, core_113, core_114, core_115, core_116, top_01, top_02, top_03, top_04, top_05, top_06, top_07, top_08, top_09, top_10, top_11, top_12, top_13, top_14, top_15, top_16, top_17, top_18, top_19, top_20, top_21, top_22, top_23, top_24, top_25, top_26, top_27, top_28, top_29, top_30, top_31, top_32, top_33, top_34, top_35, top_36, top_37, top_38, top_39, top_40, top_41, top_42, top_43, top_44, bottom_01, bottom_02, bottom_03, bottom_04, bottom_05, bottom_06, bottom_07, bottom_08, bottom_09, bottom_10, bottom_11, bottom_12, bottom_13, bottom_14, bottom_15, bottom_16, bottom_17, bottom_18, bottom_19, bottom_20, bottom_21, bottom_22, bottom_23, bottom_24, bottom_25, bottom_26, bottom_27, bottom_28, bottom_29, bottom_30, bottom_31, bottom_32, bottom_33, bottom_34, bottom_35, bottom 36, bottom_37, bottom_38, bottom_39, bottom_40, bottom_41, bottom_42, bottom_43, bottom_44, bottom_45, bottom_46, connection_to_triangle_01, connection_to_triangle_02, connection_to_triangle_03, connection_to_triangle_04, connection_to_triangle_05, connection_to_triangle_06, connection_to_triangle_07, connection_to_triangle_08, connection_to_triangle_09, connection_to_triangle_10, connection_to _triangle_11, connection_to_triangle_12, for_biotin_anchor_01, for_biotin_anchor_02, for_biotin_anchor_03, for_biotin_anchor_04, for_biotin_anchor_05, for_biotin_anchor_06, for_biotin_anchor_07, for_biotin_anchor_08, for_biotin_anchor_09, rotor_arm_dock_01, rotor_arm_dock_02, rotor_arm_dock_03, rotor_arm_dock_04, rotor_arm_dock_05, and rotor_arm_dock_06, respectively.

REFERENCES

[1] P. Ketterer, E. M. Willner, H. Dietz, Nanoscale rotary apparatus formed from tight-fitting 3D DNA components. Sci Adv 2, e1501209 (2016).

[2] F. A. Engelhardt et al., Custom-size, functional, and durable DNA origami with design-specific scaffolds. ACS nano 13, 5015-5027 (2019)

[3] K. F. Wagenbauer et al., How we make DNA origami. ChemBioChem 18, 1873-1885 405 (2017).

The features of the present invention disclosed in the specification, the claims, and/or in the accompanying figures may, both separately and in any combination thereof, be material for realizing the invention in various forms thereof.

**Claims**

1.  A nucleic acid nanomotor comprising a nucleic acid rotor and a nucleic acid stator,

    wherein said stator comprises a first surface and a rotor docking site,
    wherein said rotor comprises a stator docking site configured to be connected to said rotor docking site of said stator,
    wherein said rotor has at least one longitudinal extension, preferably at least two longitudinal extensions, extending from said stator docking site along a longitudinal axis, wherein said longitudinal axis has a substantially parallel orientation to said first surface of said stator,
    wherein said rotor is rotatable around a rotation axis substantially perpendicular to said longitudinal axis,
    wherein said rotor is electrically charged.

2.  The nucleic acid nanomotor according to claim 1, wherein said longitudinal extension of said rotor, if present each of said two longitudinal extensions of said rotor, has a length of at least 1 nm, preferably at least 10 nm, more preferably at least 30 nm.

3.  The nucleic acid nanomotor according to claim 1 or 2, wherein a total length of said longitudinal extension of said rotor, if present of said two longitudinal extensions of said rotor, is in the range of from 20 nm to 1000 nm, preferably 30 nm to 700 nm, even more preferably 50 nm to 600 nm.

4.  The nucleic acid nanomotor according to any one of the foregoing claims, wherein said rotor has a rod-like shape and/or a T-like shape.

5.  The nucleic acid nanomotor according to any one of the foregoing claims, wherein said stator comprises at least one protrusion extending towards said rotor, preferably extending towards said rotor such that said rotor interacts with said protrusion at least once when rotating by 360° with respect to said rotation axis.

6.  The nucleic acid nanomotor according to any one of the foregoing claims, wherein the nanomotor is configured such that said rotor is rotatable within an energy landscape defined by a plot of a free energy over a rotor angle $\theta$, wherein said rotor angle $\theta$ is a rotor angle of said longitudinal axis of said rotor with respect to an axis perpendicular to said rotation axis, wherein said energy landscape has at least one energy minimum.

7.  The nucleic acid nanomotor according to any one of the foregoing claims, wherein said rotor docking site and said stator docking site are directly connected, connected via a nucleic acid hinge, and/or connected via a nucleic acid torsional spring.

8.  A system comprising

    - a nanomotor comprising a rotor and a stator, wherein said stator comprises a first surface and a rotor docking site, wherein said rotor comprises a stator docking site configured to be connected to said rotor docking site of said stator,

    wherein said rotor has a longitudinal extension extending from said stator docking site along a longitudinal axis, wherein said longitudinal axis has a substantially parallel orientation to said first surface of said stator,
    wherein said rotor is rotatable around a rotation axis substantially perpendicular to said longitudinal axis,
    wherein said rotor is electrically charged;
    wherein, optionally, said nanomotor is a nanomotor according to any one of claims 1-7; and

- a control unit configured to generate an alternating current for rotating said nanomotor, wherein said control unit preferably comprises at least two electrodes;

wherein said stator of said nanomotor has a fixed orientation with respect to said control unit.

9. The system according to claim 8, wherein said stator comprises at least one protrusion extending towards said rotor, preferably extending towards said rotor such that said rotor interacts with said protrusion at least once when rotating by 360° with respect to said rotation axis.

10. A method of rotating, preferably directionally rotating, a rotor of a nanomotor with respect to a stator of said nanomotor, comprising:

i) providing a nanomotor comprising a rotor and a stator, wherein said stator comprises a first surface and a rotor docking site, wherein said rotor comprises a stator docking site configured to be connected to said rotor docking site of said stator,

wherein said rotor has a longitudinal extension extending from said stator docking site along a longitudinal axis, wherein said longitudinal axis has a substantially parallel orientation to said first surface of said stator, wherein said rotor is rotatable around a rotation axis substantially perpendicular to said longitudinal axis, wherein said rotor is electrically charged;
wherein, optionally, said nanomotor is a nanomotor according to any one of claims 1-7; and

ii) applying an alternating current to said nanomotor.

11. The method according to claim 10, wherein said stator comprises at least one protrusion extending towards said rotor, preferably extending towards said rotor such that said rotor interacts with said protrusion at least once when rotating by 360° with respect to said rotation axis.

12. The method according to claim 10 or 11, wherein said alternating current has a frequency in the range of from 0.1 to 1000 Hz, preferably in the range of from 0.5 Hz to 100 Hz, even more preferably in the range of from 1 Hz to 10 Hz, e.g. about 5 Hz.

13. The method according to any one of claims 10 to 12, wherein said alternating current has a voltage in the range of from 1 V to 200 V, preferably 5 V to 100 V, more preferably 20 V to 60 V.

14. The method according to any one of claims 10 to 13, wherein said rotor and/or said stator comprise(s) or consist(s) of nucleic acid(s), peptide(s), protein(s), and/or small molecule(s); wherein, preferably, said rotor and/or said stator comprise(s) or consist(s) of DNA.

15. Use of a nanomotor of any one of claims 1-7 or a system of any one of claims 8-9 as a turbine, propulsion, fluid mixer, energy storing device, machine applying mechanical force e.g. on a system coupled to said nanomotor, and/or in chemical synthesis.

# Figure 1

# Figure 2

Figure 3

**Figure 4**

# Figure 5

Figure 6

**Figure 7**

Figure 8

Figure 9

**Figure 10**

**Figure 11**

Figure 12

Europäisches
Patentamt

European
Patent Office

Office européen
des brevets

# EUROPEAN SEARCH REPORT

**Application Number**

EP 22 17 2353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/185295 A1 (UNIV MUENCHEN TECH [DE]) 11 October 2018 (2018-10-11) <br> * page 9, line 30 – page 10, line 6 * <br> * page 10, line 13 * <br> * page 10, line 15 – page 11, line 14 * <br> * page 14, line 18 – line 20 * <br> * page 16, line 23 – line 29 * <br> * figure 1 * <br> ───── | 1-15 | INV. <br> B82B1/00 |

**TECHNICAL FIELDS SEARCHED (IPC)**

B82B

The present search report has been drawn up for all claims

| Place of search | Date of completion of the search | Examiner |
|---|---|---|
| Berlin | 17 October 2022 | Foussier, Philippe |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................................

& : member of the same patent family, corresponding
   document

EPO FORM 1503 03.82 (P04C01)

44

## ANNEX TO THE EUROPEAN SEARCH REPORT
## ON EUROPEAN PATENT APPLICATION NO.

EP 22 17 2353

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2022

| Patent document cited in search report | | Publication date | Patent family member(s) | | Publication date |
|---|---|---|---|---|---|
| WO 2018185295 | A1 | 11-10-2018 | DK | 3607646 T3 | 26-07-2021 |
| | | | EP | 3607646 A1 | 12-02-2020 |
| | | | US | 2020031663 A1 | 30-01-2020 |
| | | | WO | 2018185295 A1 | 11-10-2018 |

EPO FORM P0459

For more details about this annex : see Official Journal of the European Patent Office, No. 12/82

EP 4 276 058 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. KETTERER ; E. M. WILLNER ; H. DIETZ.** Nanoscale rotary apparatus formed from tight-fitting 3D DNA components. *Sci Adv,* 2016, vol. 2, e1501209

- **F. A. ENGELHARDT et al.** Custom-size, functional, and durable DNA origami with design-specific scaffolds. *ACS nano,* 2019, vol. 13, 5015-5027
- **K. F. WAGENBAUER et al.** How we make DNA origami. *ChemBioChem,* 2017, vol. 18 (405), 1873-1885